# EUROPEAN PATENT SPECIFICATION

(11) **EP 4 688 184 B1**
(45) Date of publication and mention of the grant of the patent: **02.09.2026**
(21) Application number: 23828330.3
(22) Date of filing: 19.10.2023
(51) Int. Cl.: A63B 22/06, A63B 24/00, A63F 13/245, A63F 13/816, G06F 3/0362, A63F 13/98, G06F 3/01, A63B 21/005, A63B 21/012

(54) **EXERCISE MACHINE AND METHOD FOR PROVIDING A CONTROL SIGNAL CARRIED OUT BY THE MACHINE**
ÜBUNGSGERÄT UND VERFAHREN ZUR BEREITSTELLUNG EINES VON DEM GERÄT AUSGEFÜHRTEN STEUERSIGNALS
MACHINE D'EXERCICE ET PROCÉDÉ POUR FOURNIR UN SIGNAL DE COMMANDE EFFECTUÉ PAR LA MACHINE

(43) Date of publication of application: 11.02.2026
(73) Proprietor: Sykora, Pavel, 150 00 Praha 5 (CZ)
(72) Inventor: Sykora, Pavel, 150 00 Praha 5 (CZ)
(74) Representative: Dadej, Leopold
(86) International application number: PCT/CZ2023/050066
(87) International publication number: WO 2025/082555

(56) References cited:
- CA-A1- 3 009 963
- RU-C2- 2 624 874
- US-A- 5 612 718
- US-A1- 2007 123 390
- US-A1- 2007 281 828

## Description

### Technical Field

The invention relates to an innovative use of an exercise machine as an input peripheral of a computer, a game console, or other computing device.

### Background of the Invention

In the current state of the art, multiple technical solutions are known which aim at transforming movement of a person performing physical exercise on various types of exercise apparatuses and similar devices into movement of characters or objects in a virtual environment, especially in computer games, through sensors and signals generated by them. Exercise devices that are part of the prior solutions are, for example:
- a stationary bicycle, i.e., a stationary cycling exercise machine on which the user sits in a predominantly upright or bent over position and the pedals are placed under the user's torso,
- a recumbent, i.e., a stationary cycling exercise machine equipped with a backrest on which the user sits in a reclined position and the pedals are placed, compared to the stationary bicycle, more significantly in the direction in front of the user's torso, as on a recumbent bicycle, or
- a treadmill.

The document WO2012177919A2 describes an exercise machine, for example implemented as a recumbent, which is integrated into a workstation with a computer desk and a computer. This exercise machine therefore in principle replaces the computer chair and allows the user to exercise while working on the computer. However, there is no description of how the activity on the exercise machine is connected to the control of the given computer.

An exercise machine that is data-connected to a computer, such that by exercising it is possible to partially control a game running on the computer, is described in the document US5785630A. However, this exercise machine has very limited functionality, it can only be used with a computer that is adapted for such use, to play games that are also adapted for this purpose. For example, this computer senses the pedal revolutions as well as the rotation of the steering wheel, which is a part of the exercise machine, and the movement of the character in the game is controlled based on this sensing.

Document CA3009963A1 discloses an exercise machine which converts exercise activity into control signals emulating a joystick or a computer keyboard. Document US2007123390A1 discloses a game controller integrated into an exercise machine. Exercise activity sensed by sensors is provided to the game controller and is used as an interactive game input. These documents however do not deal with using an actual peripheral device at the same time as the converted signal from the exercise.

It would therefore be useful to come up with an exercise machine solution that could be used with computers or other computing devices that are not pre-adapted for this purpose, or to control programs that are not pre-adapted for this purpose.

### Summary of the Invention

The present invention is directed to an exercise machine according to claim 1, a method according to claim 8 and to a system according to claim 15.

Additional features and embodiments of the invention are defined in the dependent claims.

The above shortcomings are to some extent eliminated by an exercise machine comprising the following elements: a support structure, a seat, a backrest, at least one armrest with a support platform, an exercise element comprising pedals, and a flywheel connected to the pedals and attached to the support structure. These elements are the structural elements of the exercise machine, they are preferably connected, and their connection may be a direct mechanical connection of the parts or an indirect mechanical connection via another element - either one of the above or via some other element. For example, all the elements may be connected to the support structure, but also, for example, the armrest may be attached to the backrest and not directly to the support structure. In principle, therefore, these elements are used to support the user during exercise and to carry other components that will be described below.

Other parts of the exercise machine are a sensor of activity of the exercise element and a control unit communicatively connected to the sensor of activity. Further, the exercise machine comprises at least one input peripheral device for generating a control signal for controlling the computing device. The computing device is mainly a device from a set comprising computers, game consoles, smartphones, tablets, and headsets for virtual reality or augmented reality. The control unit is adapted (and therefore comprises program instructions) to:
- receive information about the activity of the exercise element, i.e., receive data from the sensor of activity;
- convert information about the activity of the exercise element to at least one digital control signal for controlling said computing device with a response identical to the response of said computing device in reaction to at least one control signal generatable by said input peripheral device. Thus, the control unit in principle mimics the input peripheral device and sends a similar signal influenced by the intensity of the exercise;
- provide this control signal. In order to provide it, the exercise machine may be further equipped with another component such as a connector, cable, Bluetooth module, etc., and the control unit then in principle provides or directly sends the control signal to this component.

This can be followed by sending the control signal (e.g., via connector, via wired connection, via wireless communication module; it can also be sent digitally between different programs, etc.). Further, this can be followed by the control signal possibly being received by the computing device. Further, this can be followed by the control of the computing device on the basis of the control signal - every standard computing device is already adapted to carry out this very functionality, thanks to the described signal conversion. These additional functionalities, to which the exercise machine or a part thereof may be adapted, may also be part of the method of the invention described below in the form of further steps.

The exercise machine of the invention can thus be viewed as a complex input peripheral device (for example, a complex pedaling game controller) providing a universal signal processable by any computing device. The type of control signal provided is influenced by what standard input peripheral device is part of the machine (which can be e.g., factory-supplied, or more preferably the machine can be reconfigured to adapt to the Input peripheral device added by the user. Thus, the exercise machine then preferably acts like a game controller when the user wants to connect it to a game console; like a keyboard when the user wants to connect it to a computer, etc.).

The flywheel may be connected to the pedals by a belt, chain, gears, or in another similar method. The control unit is therefore adapted to provide a signal that is as processable for any computing device as the signal generated by the given input peripheral device. In particular, the input peripheral device can be any device used to enter instructions to a computing device, such as keyboards, mice, game controllers, etc., i.e., an input and peripheral device from the perspective of the controlled computing device. It can also be a touchscreen, touchpad, trackball, microphone for entering voice instructions, movement or position sensor, camera, accelerometer, etc. Thus, for example, the control unit provides a signal that acts (elicits the same response) as the signal from a keyboard for the computing device when the input peripheral device of the exercise machine is a keyboard. The signal from the control unit does not have to be exactly the same as the signal of the input peripheral device, it is sufficient that it corresponds to the same type of device (e.g., the converted control signal looks like the signal from a mouse, but it does not have to be exactly the same signal from a mouse of the same manufacturer and type as the mouse that is part of the machine). Thus, the computing device may be able to distinguish between the signal from the input peripheral device and the converted control signal from the control unit - the important thing is that the standard computing device can react to the control signal in the same way as to a normal signal from the given input peripheral device, such that the computing device does not need to be modified in any way, or is modified only in a very standard and user-friendly way, such as by installing a driver. Thus, for example, the input device may "think" that two different mice are connected to it when a mouse is connected to it as the input peripheral device of the exercise machine (the connection may be direct or indirect via the control unit) and a control unit is connected to it providing the converted control signal. Other input peripheral devices function analogously.

The input peripheral device may be capable of generating a plurality of signals (e.g., a keyboard may generate different signals for each key, a touchscreen may transmit touch coordinates, etc.) and the control unit then provides at least one of these signals but may also be capable of providing a plurality of them.

The adaptation of the control unit to convert activity information may be carried out by predefining a certain signal or signals that the control unit will be able to provide, for example, a signal corresponding to the keyboard signal when the "w" key is pressed may be the most commonly used signal to provide forward movement of the game character and the control unit may provide a corresponding signal to the computing device depending on data from the sensor of activity of the components of the exercise element. For example, any sustained movement of the pedals of the exercise element may thus be provided to the computing device by the control unit in a form identical to a sustained press of the "w" key on a computer keyboard. The computing device will then react in the same way as it would in the case of a sustained pressing of the "w" key on a computer keyboard, i.e., by moving the game character forward in a sustained way. Similarly, the control unit may be able to provide a plurality of such signals, for example, all the signals of the standard keys on the keyboard, from which the user then chooses. Alternatively or additionally, this adaptation of the control unit may be arranged such that the control unit is adapted to learn a certain signal that is fed to it and then provide that signal to the computing device in response to the activity of the components of the exercise element, for example when a certain pedaling cadence or rotational speed of the flywheel is reached. The adaptation can then be carried out analogously to the design of the control device, for example by the same parts that generate the signal in the keyboard.

The signal provision can be carried out for example by feeding the signal into the port of the control unit, by which it is then possible to connect the control unit with any computing device, this can be for example a USB port. It is also possible to carry out the provision by sending the signal via wireless communication module or via cable connection. In principle, the adaptation of the control unit to provide the control signal to the computing device is thus carried out by adapting it to send the signal to the computing device when the computing device is data-connected to the control unit. The signal from the given input peripheral device can be sent to the control unit, which can then provide both signals (the provided control signal, to which the activity of the components of the exercise element is converted, and the signal generated by the input peripheral device) simultaneously, e.g., via single cable, similarly to the way in which the signal from several input peripheral devices is transmitted, for example, via USB hubs. It is also possible to send these signals separately, or even to send the signal from the input peripheral device directly to the computing device, not via the control unit.

The conversion of the exercise element activity to the control signal for the computing device may take the form of, for example, receiving data from the sensor of activity of the components of the exercise element (for example, the rotational speed of the flywheel, optionally supplemented by a configured load/resistance of the flywheel) and sending the signal if the activity exceeds a certain threshold value, for example, if the rotational speed is at least 30 revolutions per minute. The control signal then corresponds, for example, to the signal generated by a keyboard when a certain key is pressed on the computer keyboard or by a pedal of a game controller when such a pedal is pressed, etc. Thus, the present invention serves in particular for converting the activity of the exercise element into movement in a virtual reality, in particular a computer game. However, the provided control signal can also be used to control, for example, the speed of video playback, the movement of pages in a document, the intensity of music, etc.

The armrest with the support platform may be attached to the support structure directly, for example by means of a pillar fastened to the support structure on which the armrest with the support platform is slidingly attached, or indirectly, for example through the seat or backrest or base of the seat and backrest. The armrest with the support platform may be connected to the support structure, seat, backrest, or base of the seat and backrest rigidly or in a way allowing it to be configured in different directions. Preferably, the armrest with the support platform is height-configurable and/or can revolve around an approximately vertical axis or around a horizontal axis. Preferably, this axis of rotation intersects it outside the center of the support platform to allow the armrest with the support platform to be swiveled away from the seat by the rotation to provide space for getting on/off the seat. Preferably the seat is also rotational and/or height-configurable. Further, preferably, the pedals are height-configurable, they may alternatively or additionally be horizontally slidable for configuring the distance to the seat, or the seat may be slidable to bring the user closer to the exercise element. The input peripheral device may be any input device, in particular those usual for computers or game consoles, e.g., keyboard, mouse, touchpad, trackball, touchscreen, microphone, game controller, controller for movement in virtual or augmented reality, etc. However, a camera, a game steering wheel or pedals or any other device which can be used to generate signal that can be processed by a digital device, in particular a computing device such as a computer, a game console, or a headset for virtual or augmented reality, can also be used.

Thus, the present invention allows to connect exercise on the exercise machine with control of a computer or similar computing device. The computing device does not need to be pre-adapted for such use because the control unit provides a control signal that mimics the signal from a common input peripheral device, which the computing device can therefore process by default. Thus, direct interaction of the exercise, e.g., pedaling intensity, with the control of the computing device, especially preferably with control of movement in virtual reality, is enabled.

The converted control signal is preferably indistinguishable for the downstream computing device from the signal from the input peripheral device, i.e., the control signal from the control unit elicits the same function from the downstream computing device as the signal generated directly by the input peripheral device would. The computing device, e.g., when a mouse is connected as the input peripheral device and a control unit providing the control signal is connected, then functions in the same way as if two computer mice were connected to it, whether they were plugged into the computing device directly or via a single USB hub. The adaptation of the control unit for converting the activity into the control signal is therefore an adaptation for equating the control signal with the signal generatable by the input peripheral device.

The support platform is preferably designed or adapted for the placement and operation of at least one input peripheral device. In particular, it defines the space for this device. This adaptation can be carried out by shape and size, for example, the support platform can be flat and large enough to comfortably place keyboard and mouse, i.e., it can take form of a table. This adaptation can also be carried out by a surface treatment. In some embodiments, it may also be adapted for attachment of mouse or keyboard using magnets, such that it is possible to use these devices also in the position of the support platform significantly deviated from the horizontal plane.

Particularly preferably, the control unit is adapted to receive at least one signal generated by the input peripheral device and to provide an equated (i.e., preferably identical, but possibly also insignificantly and indistinguishably different) signal to the computing device. In other words, the control unit may learn a new signal, for example from an input peripheral device that may not have been considered when programming the control unit and may then mimic that signal and convert to it the signal generated by the sensor of activity of the components of the exercise element. For example, it is thus possible to provide a keyboard signal to the control unit when a key is pressed, instruct the control unit to store this signal, and then the control unit provides this signal based on data from the sensor of activity of the exercise element. In this case, the control unit is therefore data-connectible to the input peripheral device. The control unit can then have a memory for storing learned control signals. The control signal from the control unit can then be equated with virtually any signal from input peripheral devices, even from non-standard input peripheral devices such as additional buttons on a gaming mouse or buttons on a controller for movement in virtual or augmented reality. The downstream electronic device, especially the computing device, then reacts to the control signal from the control unit in the same way as to the signal directly generated by the input peripheral device.

The backrest is preferably a backrest with a configurable inclination. The backrest thus allows for a more comfortable seating and more intense exercise. The seat and backrest are preferably provided with a padding.

The control unit may be adapted to selectively interrupt the provision of the digital control signal, i.e., a signal (or information) from the sensor of activity of the exercise element converted to a control signal mimicking the signal from the input peripheral device. In other words, it is possible to selectively, according to the user's instructions, interrupt the link between the provision of the control signal from the control unit and the activity of the components of the exercise element, i.e., the exercise. The interruption can be carried out using software or hardware, for example by a switching element that stops the signal transmission. The delivery of data from the sensor of activity of the components of the exercise element, their conversion to the digital control signal for the computing device, and/or the actual provision of this control signal to the computing device may be interrupted. The user's instruction to interrupt and restart the provision of the control signal can be carried out, for example, using a keyboard shortcut, voice instruction, gesture, etc. It is thus possible to continue the exercise even when the user does not want to control the computing device by exercising, for example when they want their character to stop in the game, when they want to watch a video at normal speed, etc.

The exercise machine may further comprise an attachment element adapted for attaching a display unit. For example, it may comprise a screen stand with an attachment element for securing the screen on the stand. Preferably, the screen can be moved vertically and/or horizontally, to accommodate users of different heights and for different backrest inclination angles. The computing device, in particular a computer or a game console, can then be data-connected to the display unit. The display unit can be a screen, but also, for example, a projector screen or a headset for virtual or augmented reality.

Preferably, at least a part of the exercise element is rotational relative to the support structure, thus allowing for configuring the distance of the axis of rotation of the pedals from the ground. For example, the entire exercise element may be mounted on the support structure rotationally.

Further, the shortcomings of the solutions known in the prior art are to some extent eliminated by a method for providing a control signal for the computing device carried out by the exercise machine as described above. This method comprises the steps of:
- measuring the activity of the components of the exercise element by the sensor of activity of the components of the exercise element. This may be, for example, optical or magnetic measurement of the rotational speed of the flywheel or disc to which the pedals are attached, the speed of movement of the belt, chain or other components by which the pedals are connected to the flywheel, the magnitude of acceleration, the direction of rotation, etc.
- sending the values measured by the sensor of activity of the components of the exercise element to the control unit. The sending can be wired or wireless. An activity threshold value can be configured in the control unit, above which the conversion or provision of the signal to the computing device will begin.
- converting the value of the measured activity to at least one digital control signal by the control unit. The digital control signal is assimilated during the conversion to at least one signal generatable by the input peripheral device, such that a signal is provided for controlling the computing device having a response identical to that of the computing device in reaction to at least one signal generatable by the input peripheral device that is a part of the exercise machine.

This can be followed by a step of providing the control signal, and it can also be followed by sending it to the computing device. The next step can then be the control of the computing device based on the received control signal, but this step does not have to be carried out by the parts of the exercise machine. In some variants, however, the computing device can also be a part of the exercise machine.

Preferably, the control signal is equated during the conversion with at least one signal from the input peripheral device, i.e., the control signal is indistinguishable by the computing device from the signal originating directly from the input peripheral device as described above. In principle, the control unit may therefore be able to copy the signal.

The activity of the exercise element is, for example, at least one of the following quantities: the angular speed of the flywheel, the pedaling cadence of , the direction of rotation of the flywheel or the disc to which the pedals are attached, the speed of movement of the belt, chain, or other components by which the pedals are connected to the flywheel, the direction of movement of the belt, chain, or other components by which the pedals are connected to the flywheel, or the power generated by the rotation of the flywheel. Another variable can be the configured resistance of the flywheel.

The digital control signal from the control unit may have at least two values and the activity of the exercise element is then divided into at least two intervals of values divided by a threshold value, wherein the control signal has a first value when the activity of the components of the exercise element lies in the first interval and a second value when the activity of the components of the exercise element lies in the second interval. For example, the control unit does not need to take into account the exact rotational speed but only information about whether the rotational speed exceeds a certain pre-configured value. Analogously, the control signal can have more than two values, for example corresponding to no activity, rotational speed of up to 20 rpm, and rotational speed above 20 rpm. In a game environment, these signals may correspond respectively to, for example, no movement, walking, and running of the game character, wherein the user can configure the control unit for the given game such that the signal sent from it to the computing device mimics the signal from the corresponding keys of the computer keyboard.

The control signal can also change continuously with the change of the activity of the exercise element. The signal then, for example, carries information about the current pedaling cadence. The provided control signal can then be provided at a frequency corresponding to the intensity of the activity, thereby mimicking, for example, the frequency of pressing of a certain key or the rate of pressing a game pedal.

The method of the invention may further comprise a step of sending the control signal from the control unit to the computing device and a step of selectively pausing the sending of the control signal. It may further comprise a step of restarting the sending of the control signal. As described above, this step allows the user to pause the dependence of the functioning of the computing device on the activity of the exercise element, i.e., on the intensity of the exercise being performed.

The input peripheral device may be capable of selectively generating a plurality of different signals of the input peripheral device, wherein the method further comprises a step of assigning the control signal provided by the control unit to a particular input from the input peripheral device. For example, the set of possible signals from the input peripheral device may correspond to different buttons on a game controller or keys on a keyboard. The user can then select which of the signals (or plurality of signals) the provided control signal will correspond to during the exercise. In other words, the control unit is then adapted to receive at least one signal generated by the input peripheral device and provide a similar (identical with respect to response, preferably equated) control signal to the computing device as described above.

The shortcomings of the known solutions are further to some extent eliminated by a system comprising the exercise machine described above, at least one display unit, and a computing device communicatively connected to the display unit and the control unit. In particular, the computing device can be a computer, a game console, a smartphone, a tablet, or a headset for virtual or augmented reality.

### Description of Drawings

A summary of the invention is further clarified using exemplary embodiments thereof, which are described with reference to the accompanying drawings, where:
fig. 1 is a perspective view of the exercise machine of the present invention, wherein the exercise machine comprises a adjustable seat and backrest, attached on a base horizontally sliding along a support structure, an adjustable headrest, an exercise element with adjustable pedals, and two adjustable armrests with support platforms carrying a computer mouse and a keyboard divided into two pieces, wherein the armrests are attached to the base carrying also the seat and backrest,
fig. 2 is a perspective side and rear view of an alternative embodiment of the exercise machine of fig. 1, in which embodiment the armrests are attached to the backrest by pillars, wherein the adjusting and locking elements of the individual parts are visible in more detail in the drawing,
fig. 3 is a detailed perspective view of the locking mechanism of the revolving and height-configurable armrest in the alternative embodiment depicted in fig. 2,
fig. 4 is a detailed view of an anchor ring, which in the present alternative embodiment of the invention depicted in fig. 2 is, as an example, used to secure the armrests at the inclination required by the user,
fig. 5 is a perspective front view of the exercise machine in the alternative embodiment depicted in fig. 2, wherein one of the armrests is rotated to a position suitable for the user to get on the seat,
fig. 6 is a perspective side view of another alternative embodiment of the exercise machine of fig. 1, where the pillars carrying the armrests are located more prominently at the rear on the base carrying the seat and backrest to allow the widest possible range of lateral rotation of the armrests, wherein one of the armrests is rotated in this drawing to a position suitable for the user to get on the seat,
fig. 7 is a side view of the exercise machine of fig. 1, wherein both armrests are configured at the same height,
fig. 8 is a side view of the exercise machine of fig. 1, wherein the armrests are configured at different heights,
fig. 9 is a side view of the exercise machine of fig. 2, wherein the headrest is extended to a front position,
fig. 10 is a side view of the exercise machine of fig. 2, wherein the headrest is extended to a rear position closest to the backrest,
fig. 11 is a side view of the exercise machine of fig. 2, wherein the headrest is rotated upwards,
fig. 12 is a side view of the exercise machine of fig. 2, wherein the headrest is rotated forwards,
fig. 13 is a detailed view of the mechanism for adjusting and rotating the headrest,
fig. 14 is a side view of the exercise machine of fig. 2, wherein the armrests are configured horizontally,
fig. 15 is a side view of the exercise machine of fig. 2, wherein the backrest is reclined backwards at a greater angle than in fig. 14 and the armrests form with the backrest approximately the same angle as in fig. 14,
fig. 16 is a side view of the exercise machine of fig. 2, wherein the backrest is reclined more significantly backwards than in fig. 14 and the armrests are configured approximately horizontally, thus demonstrating the advantage of such mechanisms of attachment of armrests that allow to maintain an approximately horizontal position of the armrests regardless of the changing inclination of the backrest,

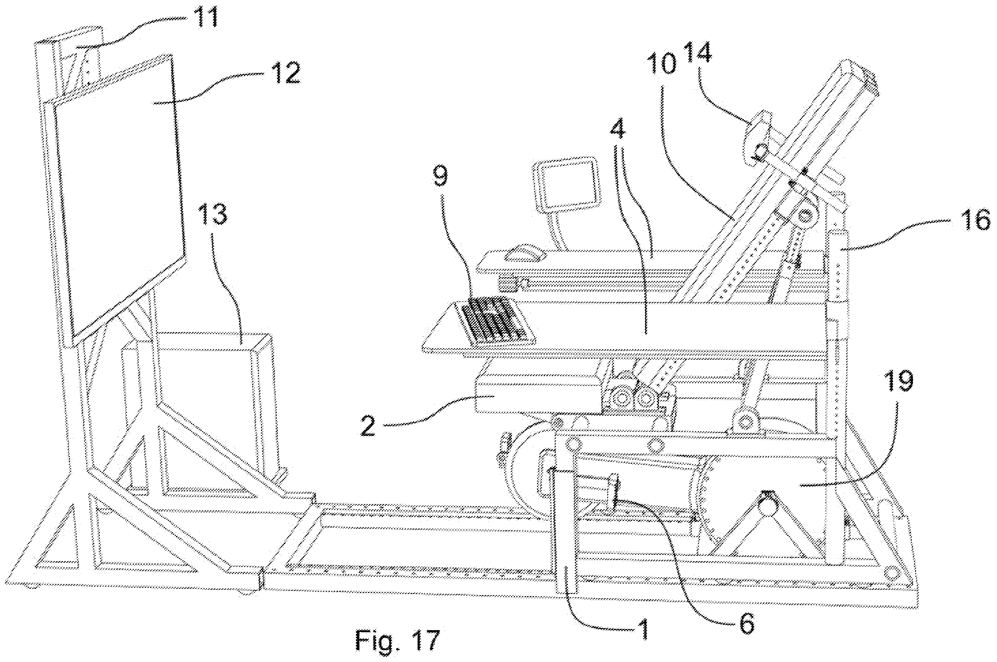

fig. 17 is a view of a folded exercise machine of the embodiment of fig. 6, where the exercise element is located under the seat,
fig. 18 is a view of an open exercise element, such that the flywheel and its connection to the pedals is visible,
fig. 19 is a view of the exercise element rotated on its stand such that the pedals are higher than in fig. 18,
fig. 20 is a schematic diagram of the connection of the control unit to the sensor of activity of the components of the exercise element, the control unit, the input peripheral device, and the computing device,
fig. 21 is a flow chart of an embodiment of the method of the invention,
fig. 22 is a flow chart of an alternative embodiment of the method of the invention, and
fig. 23 shows another alternative embodiment of the method of the invention.

### Exemplary Embodiments of the Invention

The invention will be further clarified using exemplary embodiments with reference to the respective drawings, which, however, have no limiting effect from the point of view of the scope of protection. The exercise machine is depicted in the drawings in three embodiments, differing primarily in the attachment of the armrests 3 with the support platforms 4 and the variability of their configuration. The main parts of the exercise machine are implemented identically in these embodiments and specific details relating to the structure of the armrests 3, backrest 10, headrest 14, etc. of one embodiment may be used in another one of these embodiments. Attention is paid to these elements because the support platforms 4 are used for the placement of the input peripheral devices that the user must be able to control during exercise in an ergonomically suitable position, wherein this must be possible for users of different figures and at different inclinations of the backrest 10. Elements that are implemented identically or with only minor differences between these embodiments (in particular aspects relating to signal conversion and provision but also the form of the support structure 1, the exercise element 19, or the backrest 10) are not described in detail below for each embodiment separately - their descriptions are common to these embodiments.

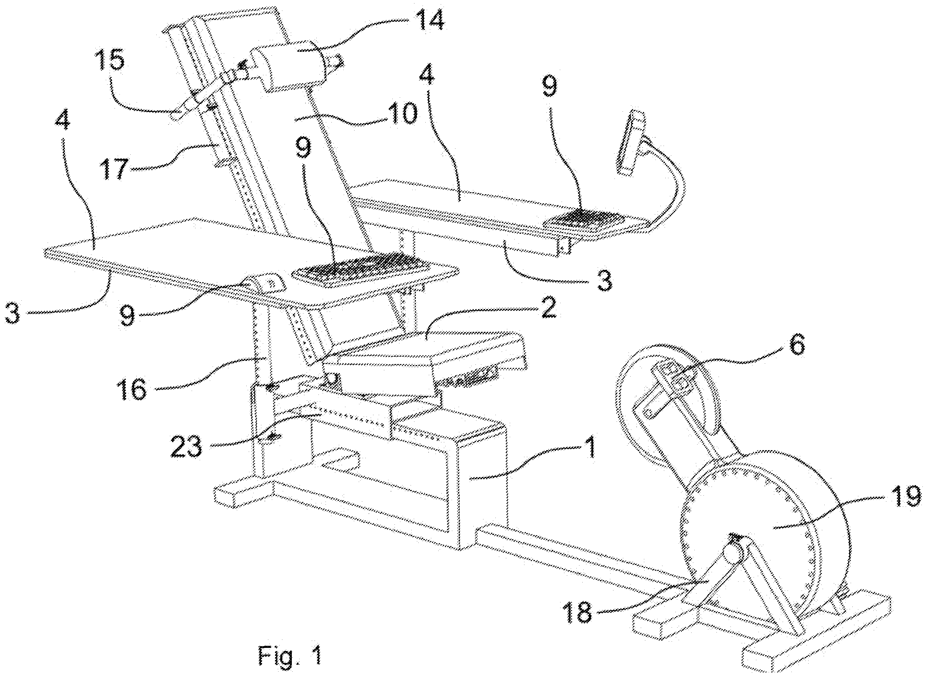

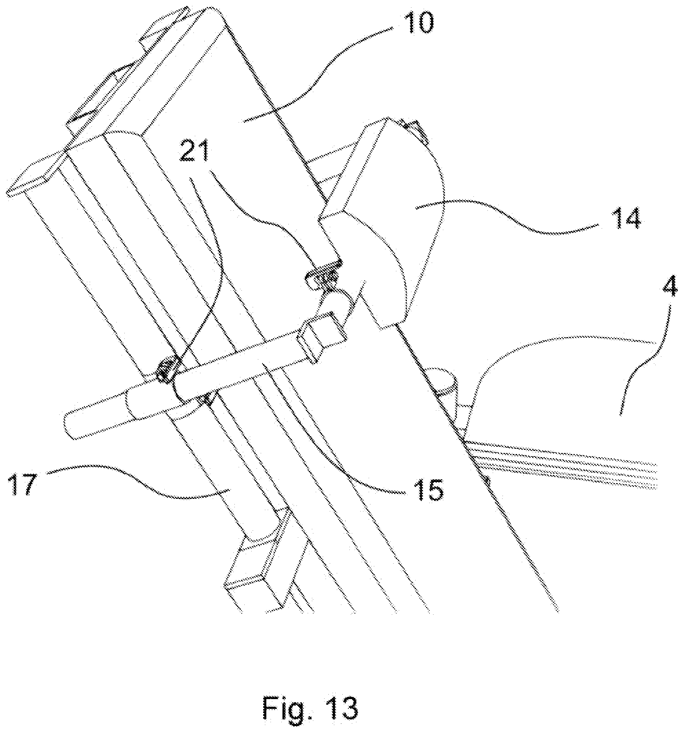

The exercise machine, shown e.g., in figs. 1, 7, and 8, comprises the support structure 1, wherein the seat 2 for seating the exerciser and the backrest 10 for supporting the back of the exerciser are placed on a base 23 of the seat and backrest movably attached to the support structure. The seat is placed movably such that its inclination relative to the horizontal plane can be changed. The angular configuration of the seat is carried out by a gear with an anchor ring 20, which serves to lock the gear in the given position by supporting it against the immovable part of the base. The ring is handled manually and removing it from the gear enables adjusting. The backrest 10 is placed movably such that its inclination relative to the horizontal plane can be changed. The angular configuration of the backrest 10 is carried out analogously - by a gear with the anchor ring 20, which serves to lock the gear in the given position. As an example, the backrest 10 is provided with a guide element 17 of the backrest, for example a guide rod located on both lateral sides of the backrest 10 (see fig. 13), on which the support element 15 of the headrest is slidingly placed by means of tube clamps.

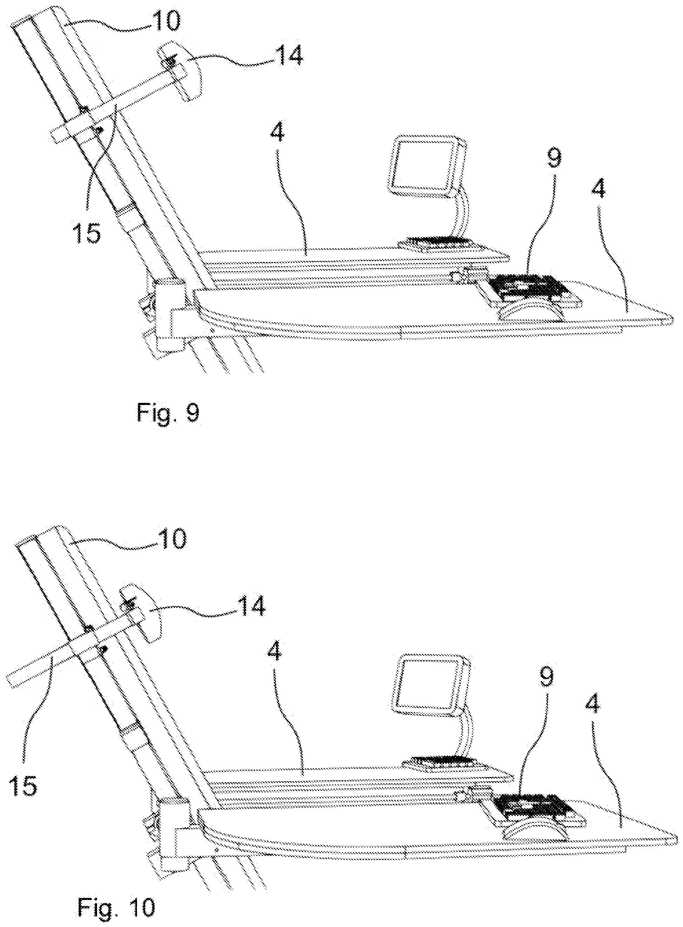

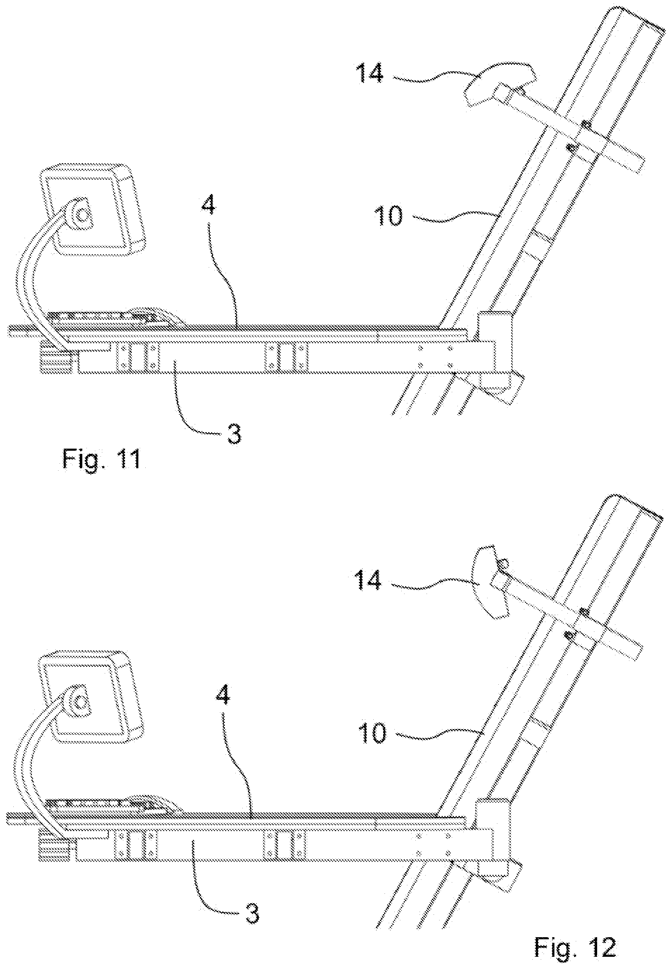

The position of the support element 15 of the headrest can be regulated by sliding the support element 15 of the headrest along the guide element 17 of the backrest. The fixation of the position is then ensured e.g., by tightening the sleeve. The support element 15 of the headrest is mounted on the guide elements 17 of the backrest slidingly by means of a sleeve, wherein the direction of this movement of the support element 15 of the headrest in the sleeve is approximately perpendicular to the direction of movement of the support element 15 of the headrest together with the sleeve on the guide element 17 of the backrest. The movement of the headrest 14 relative to the support element 15 of the headrest can be locked, e.g., by tightening the sleeve by means of a quick-release clamp 21. This movement ensures a change in the distance of the headrest 14 from the backrest 10 (cf. figs. 9 and 10). The position of the headrest 14 is further adjustable by changing its tilt relative to the backrest 10 (cf. figs. 11 and 12). Changing the tilt of the headrest 14 is accomplished by releasing the clamping element, such as a sleeve or clamp, thereby releasing the headrest 14 and allowing it to tilt. The selected position of the headrest 14 is then fixed by tightening the clamping element. As an example, the seat 2, the backrest 10, and the headrest 14 are provided with a padding. The configurable attachment of the headrest 14, which is sliding along the backrest 10, perpendicular to the backrest 10, and is tiltable, is shown in fig. 13, where the guide elements 17 are guide rods, the sliding along the guide rods in two mutually perpendicular axes and the tilting of the headrest 14 are secured by tube clamps and the securing of the position is carried out by quick-release clamps 21 for tightening the sleeves. The configurability of the headrest 14, at least in terms of its distance from the upper edge of the backrest 10 and from the plane of the backrest 10, is preferred in particular in embodiments with an adjustable tilt of the backrest 10 such that the headrest 14 can always be configured to allow the user to adjust the position of the headrest 14 to the size of their figure and to the inclination of the backrest 10 and thus have a comfortable view of any screen.

The exercise machine comprises the armrest 3 with the support platform 4 for placement and operation of an input peripheral device 9. For example, the support platform 4 may be implemented as a work table, for example for placing a keyboard or mouse, as in the embodiments shown.

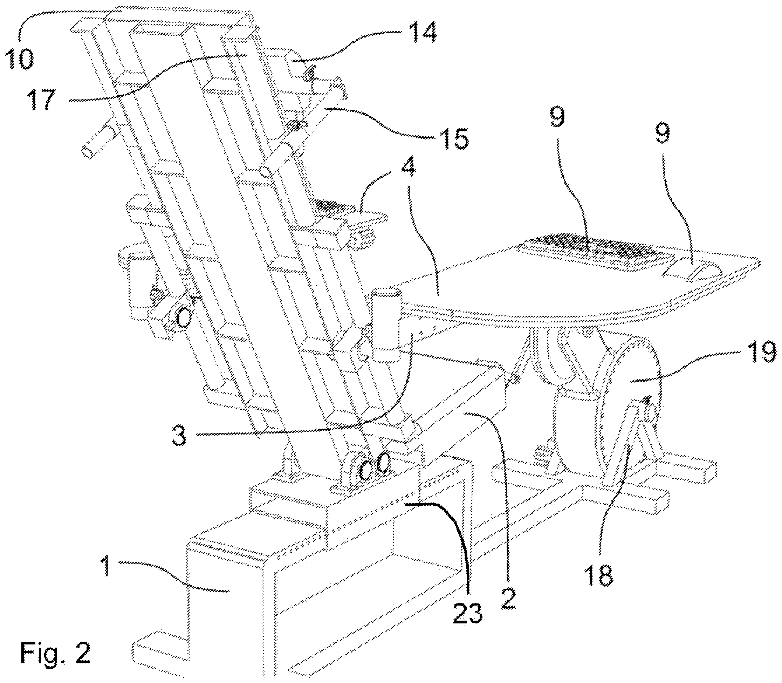

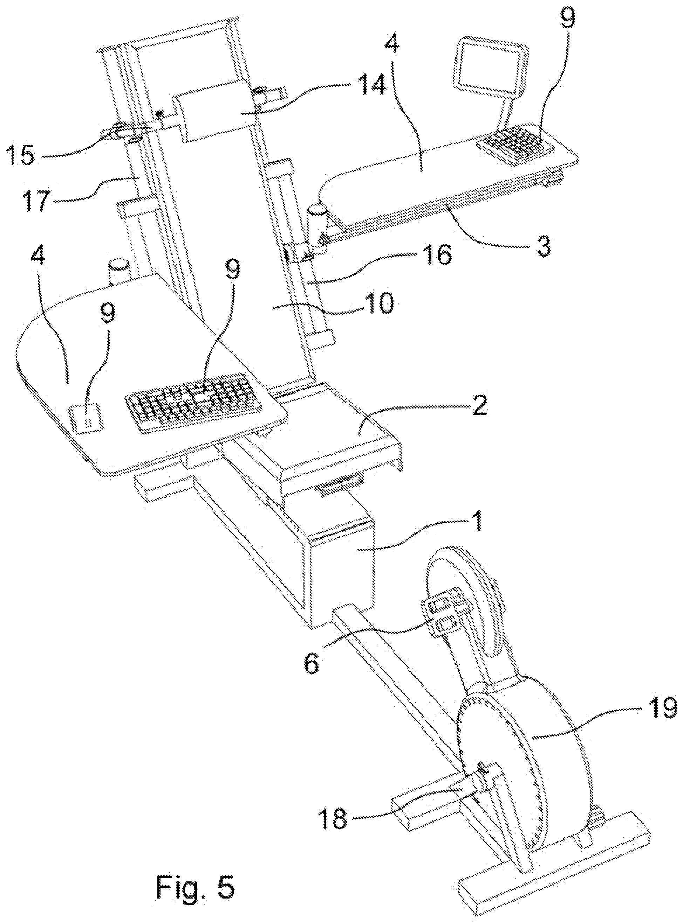

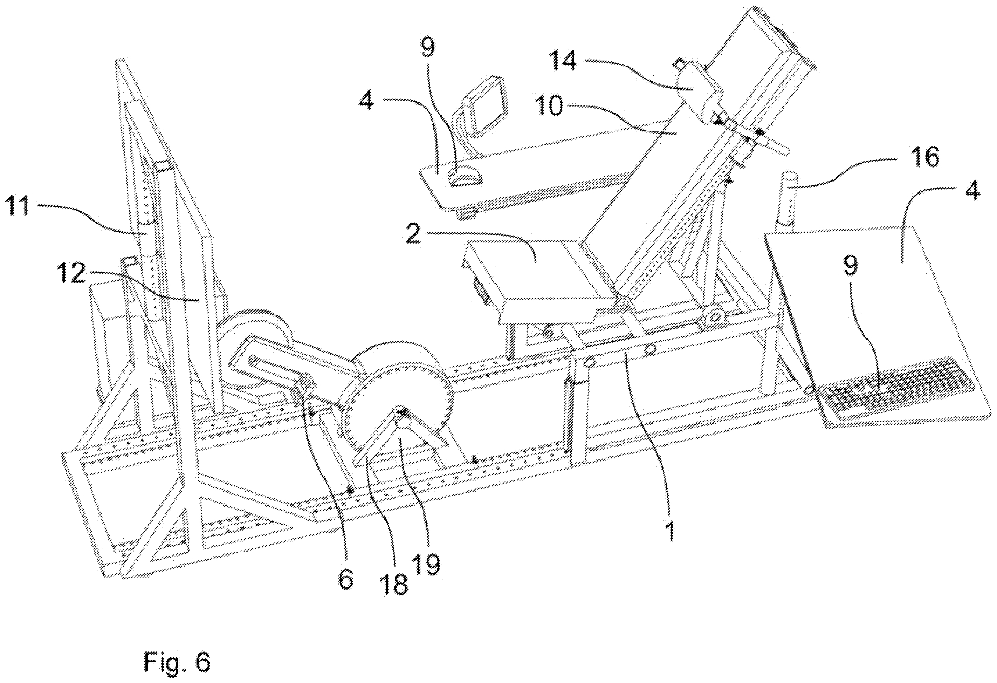

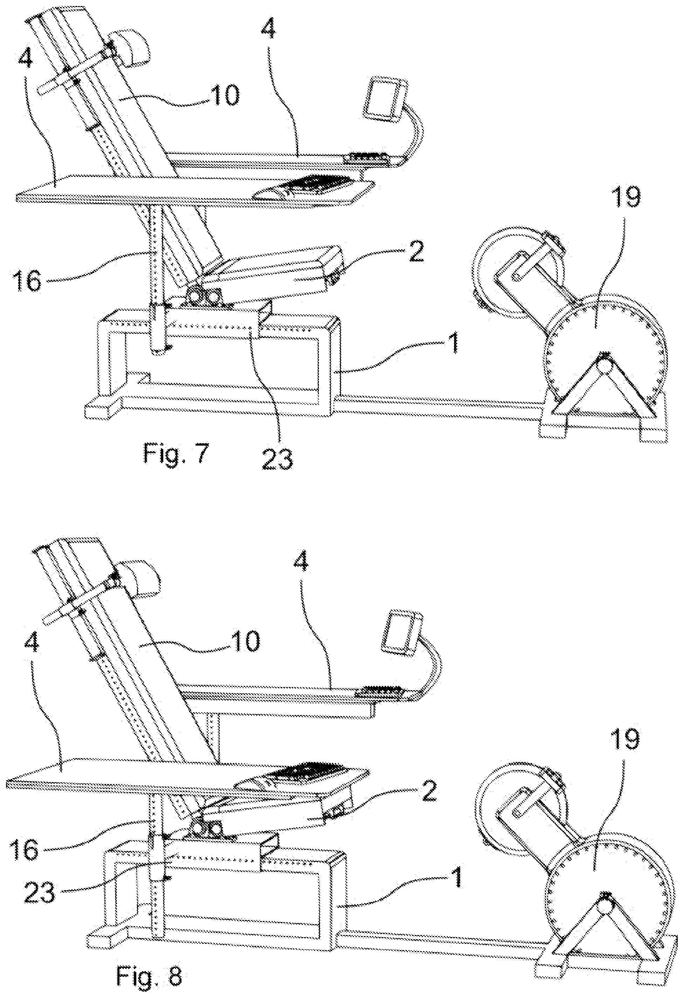

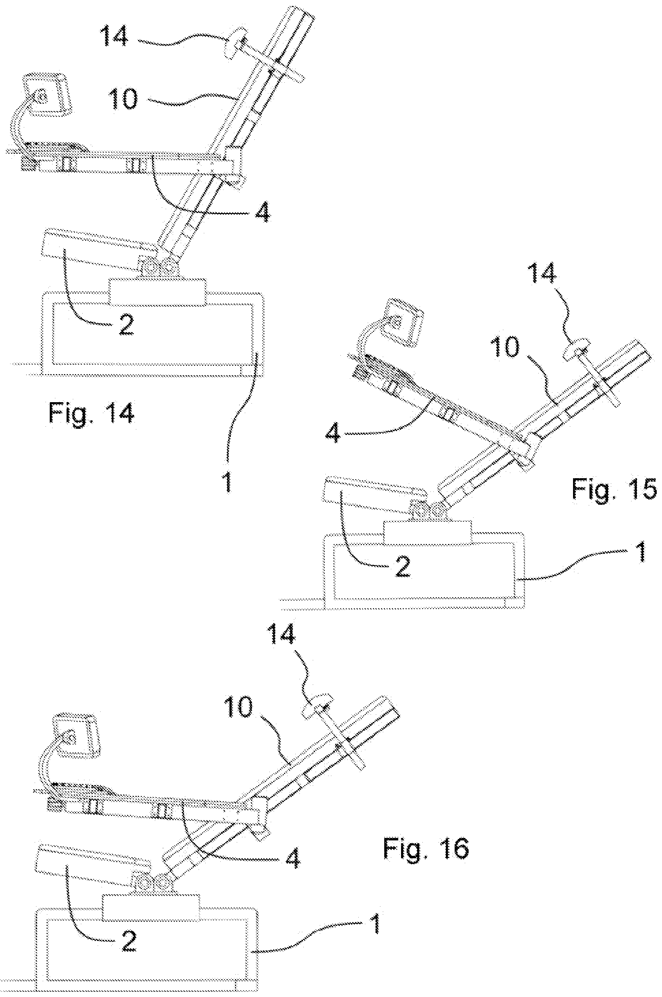

Thus, as an example, the exercise machine further comprises at least one pillar 16 located on the lateral side of the base of the seat (see figs. 1, 7, and 8; and further figs. 5 and 11, where the pillar is located closer to the rear part of the exercise machine) or backrest 10 (see figs. 2 or 5). At least one armrest 3 with the support platform 4 is movably attached to the pillar 16. The armrest 3 with the support platform 4 in principle forms an elbow rest on which the user can control the input peripheral device 9, e.g., a mouse or keyboard. The movable attachment of the work table allows sliding movement of the work table on the pillar 16 (height configuration, cf. figs. 7 and 8), rotational movement of the table around the central axis of the pillar 16 (cf. figs. 5 and 6), and the tilting of the work table, or changing the angle of tilt relative to the horizontal plane (cf. figs. 14, 15, and 16, where the inclination of the support platforms on the armrests 3 is combined with the tilt of the backrest 10). For example, the width of the support platform is in the range of values of 15-60 cm.

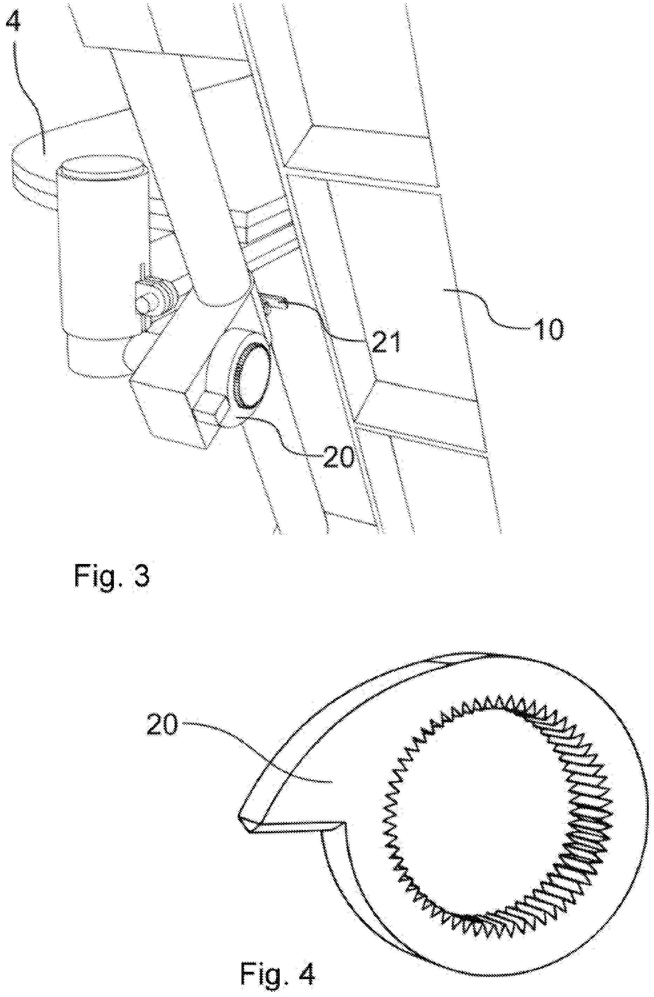

Preferably, the exercise machine comprises two pillars 16, each on one lateral side of the base of the seat or backrest 10. Each pillar 16 is provided with a single movably attached armrest with the support platform 4, wherein the support platforms 4 may have different shapes or sizes. The movement of the armrest with the support platform 4 on the pillar 16 is secured by a sleeve or clamp, or the pillar 16 is additionally provided with a number of regularly spaced openings and the attachment of the work table is provided with an opening, wherein the position of the work table is secured by inserting a locking pin into the overlapping openings in the pillar 16 and the attachment of the work table. The rotational movement of the work table around the axis of the pillar 16 is secured by a sleeve or clamp. Preferably, the axis of rotation of at least one work table is offset from the center / center of gravity of the work table such that this rotational movement then ensures that the work table can be tilted to a great extent away from the seat space to facilitate the user's access to the seat (see figs. 1, 5, and 6). The angular configuration of the work table is, in some embodiments (figs. 2 and 3), achieved by the gear with the anchor ring 20, which serves to lock the gear in the given position.

The exercise machine further comprises, in the embodiments shown, a rail on which the base 23 of the seat and backrest is movably attached (see, e.g., figs. 1, 2, or 7). The base moves along at least one axis, for example to change the distance of the seat 2 to the pedals 6 or the screen. The position of the base on the rail is locked by a locking mechanism, which may be, as an example, implemented in the form of a number of regularly spaced openings, wherein the base of the seat is provided with at least one opening, wherein the fixation is ensured by inserting a locking pin into the overlapping openings in the rail and in the base of the seat. In the embodiment shown (see e.g., fig. 7), the base 23 of the seat and backrest is sliding relative to the support structure comprising the rail with the locking openings. The pillars 16 of the armrests 3 are then attached to the sliding base, as is the seat 2 with backrest 10.

Alternatively, the armrests with the support platforms 4 can be attached, for example, rigidly in a constantly horizontal position with height configuration. Such attachment is preferable in combination with a tilting seat 2 or backrest 10, as it ensures that the support platform 4 is horizontal regardless of the tilt of the other parts of the exercise machine. Alternatively, the armrests with the support platforms 4 can be fastened to the backrest 10. Preferably, the work table can then be tilted to be able to ensure an approximately horizontal position suitable for the placement of the input peripheral devices 9 and for an ergonomic wrist and hand position, with the forearm in approximately the same plane as the input peripheral device 9. In case the armrests with the support platforms 4 are immovable relative to the configurable backrest 10, it may be preferable, for example, to attach the keyboard to the work table. The mouse can then be attached, for example, using magnets or replaced with a touchpad, trackball, or touchscreen.

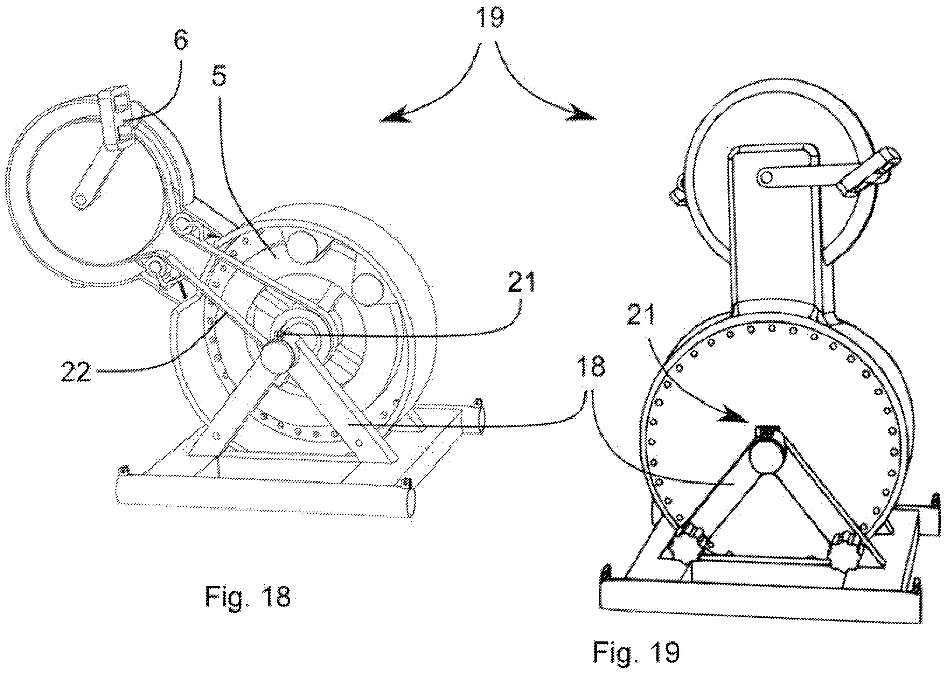

The exercise machine further comprises, in all the examples shown, an exercise element 19 shown in detail in figs. 18 and 19, on which the user performs the exercise activity. The exercise activity is the propulsion of the components of the exercise element 19, in particular the flywheel, by user via the pedals 6. To ensure stability, the exercise element 19 is provided with a stand 18 of the exercise element 19, which is attached to the support structure 1 of the exercise machine. According to at least one exemplary embodiment (see fig. 6), the exercise element 19 is slidingly attached to the rail, wherein the position of the exercise element 19 can be fixed by a locking mechanism similar to the one described above for the base of the seat, e.g. by a sleeve or a clamp, or the exercise element 19 is provided with at least one opening, wherein the fixation is ensured by inserting a locking pin into the overlapping openings in the rail and in the exercise element.

The exercise element 19 comprises a flywheel 5, the rotational movement of which is propelled by pressing of the pedals 6 to which it is connected by means of a transmission belt 22 (see fig. 18), chain, or gears. Preferably, a flywheel with a freewheel mechanism is used such that the flywheel can continue the inertial movement even after the movement of the pedals 6 has ceased. The resistance of the flywheel 5 can be continuously regulated by a control element typical for recumbents, e.g., by moving a permanent magnet away from or closer to the steel body of the flywheel 5 using an electric motor, or alternatively, it is possible to regulate the resistance of the flywheel 5 by a mechanism using electromagnetic induction or friction. The exercise element 19 further comprises a sensor 7 of activity of the exercise element, or a component thereof, such as its flywheel 5, or belt. This may be, for example, a magnetic speed sensor or an optical sensor of the movement of the belt 22, possibly supplemented by a sensor of the configuration of the load (resistance) of the flywheel 5. As an example, the activity of the components of the exercise element 19 is determined by at least one of the following parameters: the angular speed of the flywheel 5, the cadence of the pressing of the pedals 6, the direction of rotation of the flywheel 5, the direction of rotation of the pedals 6, the direction of movement of the belt 22 or other components connecting the pedals 6 to the flywheel 5, the speed of movement of the belt 22 or other components connecting the pedals 6 to the flywheel 5, or the power generated by the rotation of the flywheel 5. In some embodiments, the pedals 6 may also be directly attached to the flywheel 5.

The exercise element 19 in the examples shown further allows configuration of the height of the pedals 6. This configuration is particularly preferable in embodiments with the backrest 10 with a configurable inclination, where it is desirable to change the height of the axis of rotation of the pedals 6 depending on the inclination of the backrest 10. While in relatively upright position of the user's torso the ergonomic position of the axis of pedaling is below the plane of the seat 2, with the backrest 10 (and therefore the user's torso) tilting backwards the ergonomic position of the axis of pedaling shifts upwards - in fully horizontal position of the user's torso the ergonomic position of the axis of pedaling is placed above the plane of the seat 2. Alternatively or additionally, the position of the axis relative to the plane of the seat 2 can be changed by configuring the height of the seat 2. For example, the axis of rotation of the pedals 6 is in a fixed position relative to the axis of the flywheel 5, but the entire exercise element 19 is rotational around the axis of the flywheel 5, thereby configuring the distance of the axis of rotation of the pedals 6 from the floor/ground or from the level of the seat 2, as shown in figs. 18 and 19. This configuration requires a relatively small force because the center of gravity of the flywheel 5, which is usually the heaviest part of the exercise element 19, remains in approximately the same location. The securing of the exercise element 19 against rotation is then carried out, for example, by means of a quick-release clamp 21, by locking using openings and pins or screws, by a ring and a gear, etc. Preferably, the height configurability of the (axis of the) pedals 6 is combined with the sliding of the exercise element 19 in a horizontal direction, e.g., along the rail, thereby enabling the pedals 6 to be shifted to any position relative to the seat 2 according to the user's requirements.

Preferably, the adjustability of the height of the axis of rotation of the pedals 6 is combined with the sliding capacity of the exercise element 19 along the support frame, wherein it is possible to slide the exercise element 19 at least partially under the seat 2 of the exercise machine, at least in some position of configuration of the seat 2 and the pedals 6. This allows the exercise machine to be partially folded when not in use, such that it takes up less space. The pedals 6 can be provided with a foot attachment mechanism such as straps or footplates for use with cycling shoes. This is preferable, in particular, when the axis of rotation of the pedals 6 is configured to a height above the level of the seat 2.

The exercise machine further optionally comprises a stand with an attachment element 11 (see fig. 6) adapted for a movable attachment of a display unit 12, such as a monitor or a television. The display unit 12 is placed on the stand movably, wherein it is possible to perform at least vertical movement by sliding the attachment element 11 on the stand, wherein in the selected position the attachment element 11 is subsequently locked by a locking mechanism, e.g. a sleeve or a clamp, alternatively, the stand is provided with a number of regularly spaced openings and the attachment element 11 is provided with at least one opening, wherein the locking is accomplished by inserting a locking pin into the overlapping openings. The stand may further slide horizontally, using a rail, similar to the case of the base 23 and/or the exercise element 19.

The wide range of adjustability of the exercise machine, in particular the adjustability (rotation and/or sliding) of the seat 2, the backrest 10, the headrest 14, the support platforms, the base, the exercise element, and the stand 18 of the exercise element 19, allow the exercise machine to be configured to substantially any position that suits the particular user. Thanks to the sensor 7 of activity of the components of the exercise element and the control unit 8, as will be described below, it is then possible to use the user's exercise activity on the exercise element 19 to control the functions of the computing device 13, for example to regulate the speed of the character's movement in the computer game by pedaling speed.

Thus, the exercise machine further comprises a control unit 8 communicatively connected to the sensor 7 of activity of the components of the exercise element 19. The communication link can be implemented by any method suitable for data transmission, both wired and wireless. Further, the exercise machine comprises at least one input peripheral device 9. The device may be, for example, a keyboard, mouse, touchpad, touchscreen, game controller, etc. In principle, any device usable for delivering instructions or information to the computing device 13, e.g., a computer, game console, tablet, phone, headset for virtual or augmented reality, etc., may be used. The control unit 8 is adapted to receive data from the sensor 7 of activity of the components of the exercise element 19, that is, for example, to receive data about the activity of the flywheel 5 or the belt 22, to convert these data into a digital control signal corresponding to at least one signal emitted by the input peripheral device 9, and to provide this control signal. The provision may be, for example, sending data to the computing device 13 or other hardware, but may also be implemented by a software, within the control unit 8, where the control signal is provided to a program implemented by the control unit 8 in parallel to the processing of the data from the sensor 7 of activity of the components of the exercise element 19.

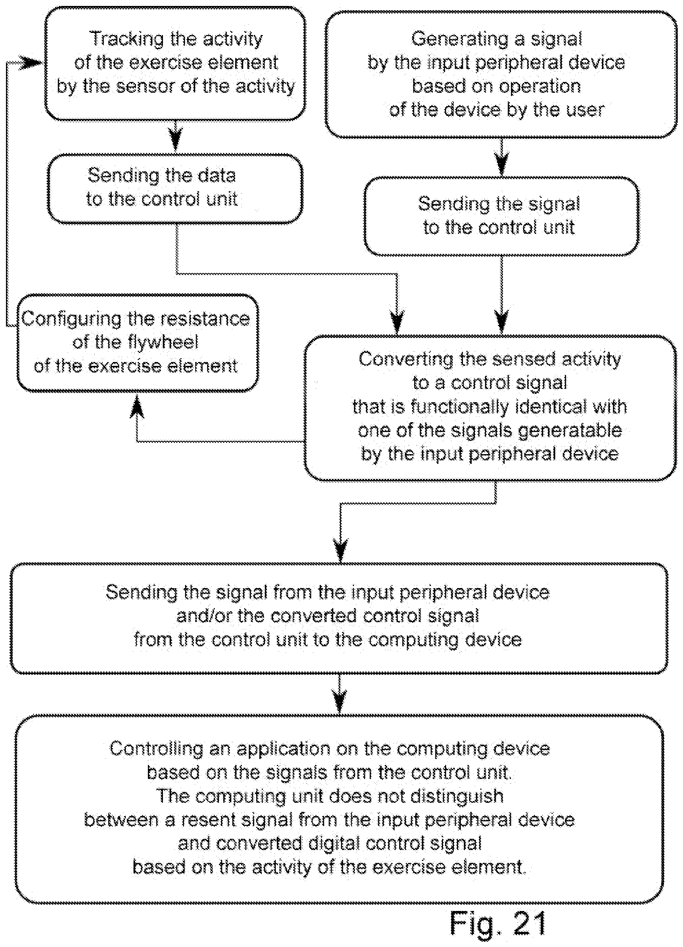

Thus, in other words, the control unit 8 can mimic the signal from the input peripheral device 9 and provide the control signal to any hardware or software depending on the activity of the flywheel 5, the belt 22, or other components of the exercise element 19 measured by the sensor 7 of activity of the components of the exercise element 19. The control signal elicits the same response in the computing device 13 as would be elicited by any of the signals that may be generated and provided by the given input peripheral device 9. In the examples of the embodiments (see figs. 21-23), the control signal is equated with the signal from the input peripheral device 9, such that the computing device 13, when receiving signals from the exercise machine, does not recognize whether it is receiving a control signal or a signal directly from the input peripheral device 9. Thus, the exercise on the exercise element 19 may replace a part of the function of the given input peripheral device 9. The hardware or software does not have to be modified in any way. From the perspective of the hardware or software, the control signal obtained by converting the activity of the flywheel 5, the belt 22, or other components of the exercise element may be indistinguishable from the signal originating from the input peripheral device 9, or other device of the same type.

The adaptation of the control unit 8 to mimic the signal from the input peripheral device 9, i.e., to provide a digital control signal from the activity of the flywheel 5 or other components of the exercise element 19 as an input signal (for the computing device 13, other software module in the control unit 8, etc.) from the control device 9, may be pre-configured, for example the control unit 8 may be adapted to emit/provide a signal corresponding to a left mouse button press, and therefore, the controlled software application or its configuration determines which function in the resulting game or application the present invention will allow to be controlled by the exercise machine. I.e., if the computer game is configured to move the character forward by pressing the left mouse button, the exercise machine will provide that character movement.

However, preferably (e.g., in the shown embodiments of figs. 21 to 23), the control unit 8 is adapted to selectively configure the signal from the input peripheral device 9 to be mimicked by it. It is therefore further adapted to receive the input signal from the input peripheral device 9 and to provide a certain received signal (for example, that is, a particular time dependence of the voltage value, for example corresponding to the signal transmitted from the keyboard when the up arrow key is pressed) based on data from the sensor 7 of activity of the components of the exercise element 19. Thus, for example, the control unit 8 provides (for example, feeds to its output port, sends to the computing device 13, sends to a certain program running on the control unit 8, etc.) a signal corresponding to the pressing of the up arrow key on the computer keyboard each time a pedaling is recorded (e.g. the rotation of the flywheel 5 or the movement of the belt 22 is non-zero) or when the pedaling speed exceeds a certain threshold value, etc.

The control unit 8 preferably allows for selective interruption of the provision of the control signal based on the activity of the flywheel 5, movement of the belt 22, or another component of the exercise element 19. In other words, the user is allowed to pause the control of the computing device 13 (e.g., the movement of the character in the game) by the exercise machine, i.e., the user can continue to pedal without influencing the computing device 13. This interruption may be carried out, for example, by a control element provided on the control unit or elsewhere on the exercise machine for this purpose, by a certain control element on the input peripheral device 9, by a voice instruction, etc. The subsequent (re)start of the provision of the control signal that reflects the activity of the flywheel 5 of the movement of the belt 22 or another component of the exercise element 19 may be carried out analogously. This preferred functionality is also included in the embodiments shown.

Furthermore, preferably a part of the exercise machine of the invention is a computing device 13, such as a personal computer, a headset for virtual or augmented reality, a game console, a television, etc. This computing device 13 then receives the digital control signal provided by the control unit 8, or the control unit 8 may be a part of it. Thus, in some embodiments, the control unit 8 may be a part of the exercise machine that is data-connected to the computing device 13, where it provides and sends the control signal, and in other embodiments, it may be a part of the computing device 13 that is data-connected to the sensor 7 of activity of the components of the exercise element 19, for example, it may also provide the operation of a headset for virtual or augmented reality, such that the control signal is then provided to e.g. another processor in the same computing device 13 or to another software module implemented by the control unit 8.

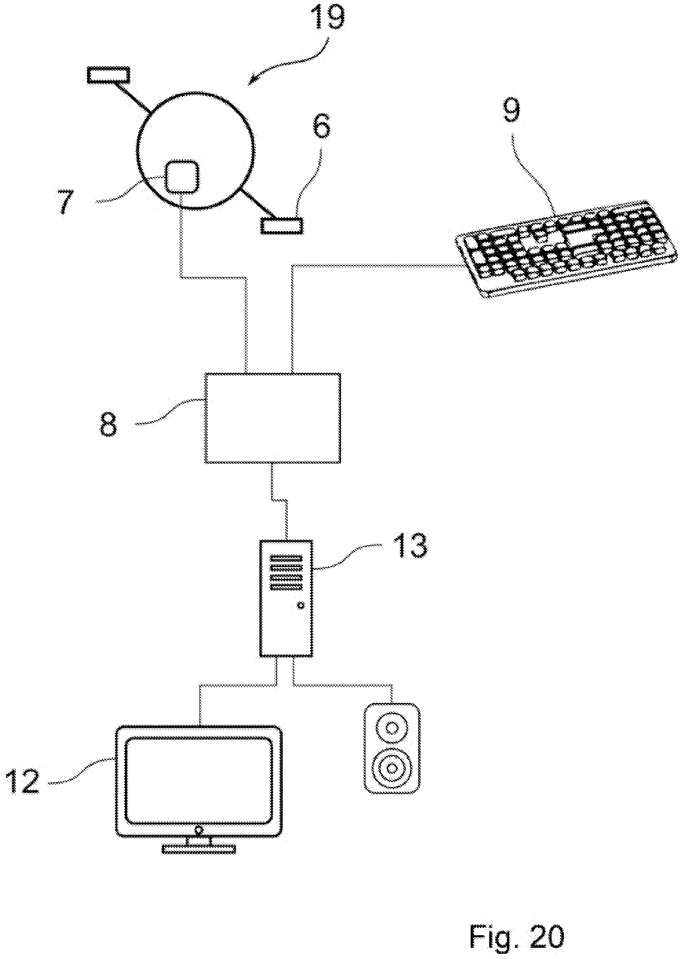

The communication link between the control unit 8 and the computing device 13 may be, for example, wired, e.g., via a USB connector, but may also be wireless, for example via a Wi-Fi or Bluetooth signal. Preferably, the control unit 8 is adapted such that it can be data-connected to, and it can used to control via the control signal, any computing device 13, e.g., irrespective of the operating system or manufacturer, whether it is a computer or a game console, etc. The data connections between the electronic components of the exercise machine, the computing device 13, and the output devices are shown in fig. 20.

Furthermore, the object of the invention is a method for controlling a digital or electronic device, in particular the computing device 13 as described above, carried out by the exercise machine of the invention. This method comprises the following steps:
- Measuring the activity of the components of the exercise element 19 by the sensor 7 of activity of the components of the exercise element 19. The output of this measurement may be, for example, any of the parameters described above, i.e., for example, information as to whether or not the flywheel 5 is rotating or not or whether it is rotating at least at some threshold speed; the rotational speed (cadence); the configuration of the load (resistance of the flywheel 5), the speed of movement of the belt 22, etc.
- Sending the data from the sensor 7 of activity of the components of the exercise element to the control unit 8. This sending can be implemented by a data (communication) link, which can be wired or wireless.
- Converting the data from the sensor 7 of activity of the components of the exercise element to the control signal by the control unit 8, wherein this signal is equated with at least one signal to the provision of which an input peripheral device 9 is adapted. Equating the signal means that the computing device 13, such as a computer or console, which receives such a signal carries out the same functions on the basis of this signal as if it had received the given signal from the input peripheral device 9, without the computing device 13 being able to distinguish between the control signal and the signal directly from the input peripheral device 9 or another device of the same type. In other words, the signal generated by the input peripheral device 9 does not need to be exactly the same at every arbitrarily small instant of time as the digital signal to which the activity of the flywheel 5 is converted, but the signals must have the same impact, without it being possible to know the difference, on the computing device 13 or software to be controlled by it. Thus, the differences between the signal that may be generated by the input peripheral device 9, e.g., in reaction to pressing a certain key on a computer keyboard, and the control signal to which the activity is converted are insignificant for the function of the computing device 13 or the controlled program. In an exemplary embodiment, the control unit 8 copies the signal from the input peripheral device 9 and provides it further depending on the data from the sensor 7 of activity.

This may be further followed by a step of providing this control signal to the given computing device 13, or a step of transmitting the control signal to the computing device 13 and subsequently controlling a function of the given device or a part thereof by the provided control signal.

The step of converting may comprise converting the activity to binary information based on a certain threshold value, as mentioned above. Thus, if the activity of any of the components of the exercise element 19, for example the revolutions of the flywheel 5 per minute, is higher than the threshold value, the signal has a first form, and if it is lower than the threshold value, the signal has a second form. For example, the first form of the signal may correspond to the signal emitted by the keyboard when the up arrow or "w" key is pressed, while the second form corresponds to the signal from the keyboard when no key is pressed (which may optionally be also no signal). Alternatively, the control signal may uniquely identify specific values of the activity, i.e., the signal continuously changes with changing activity of the components of the exercise element 19. The signal then not only transmits information about movement / lack of movement, but also information about how fast the movement is, or in what direction and with what load it occurs, which information can be for example expressed in the controlled program running on the computing device 13 by the speed or direction of movement of a character/vehicle in a computer game.

Preferably the method further comprises steps of recording a certain signal from the input peripheral device 9 and configuring this signal as the control signal to which the activity of the components of the exercise element 19 is converted. Thus, for example, the user initiates this step of recording, for example using the control elements provided on the control unit 8, and then initiates the emission of the given input signal on the input peripheral device 9, for example by pressing a particular key on a computer keyboard. The control unit 8 records the signal and stores its form (frequency, amplitude, change in time, duration, etc.). Subsequently, the control unit 8 provides such a control signal based on the recorded activity of the components of the exercise element 19. In embodiments with a continuous dependence of the control signal on the activity, or at least a graded dependence on the activity of the components of the exercise element 19, the value of the activity may thus influence what control signal is provided. Thus, for example, in response to different frequencies of rotation of the flywheel 5 or speeds of movement of the belt 22, the control signals transmitted may correspond to different levels of pressing of the acceleration pedal used to control the speed of movement of a vehicle in some computer games. Analogously, not only the pressing of which button or other control element of the input peripheral device 9 is to be imitated by the control unit 8 based on the measured activity may be configured but also which of the plurality of input peripheral devices 9, and possibly which control element thereof, is to be imitated. Thus, for example, the user can configure whether the control unit 8 provides a control signal equated with a computer keyboard or mouse signal.

Preferably, the method also comprises a step of selectively pausing the conversion of the activity to the control signal or pausing the provision of that control signal, as described above for the exercise machine of the invention. Thus, if the user selects this selective pause, for example, by a particular key combination, voice instruction, or a particular control element provided on the control unit 8 or elsewhere on the exercise machine, the control unit 8 may stop receiving or processing data from the sensor 7 of activity of the exercise element 19, or may both receive and convert these data into a digital control signal but not provide it further to the computing device 13 or other digital device.

Preferably, the method further comprises, or may comprise, a step of selecting the input signal from the input peripheral device 9 with which the converted signal is to be equated. For example, the control unit 8 is provided with a memory in which several possible digital control signals are stored, for example pre-configured by the user by means of recording, as described above. The user can then, for example, switch between these pre-configured control signals by voice instructions, by selections using buttons or touchscreen on the control unit 8, or keyboard shortcuts, thus, for example, replacing the simulation of pressing the up arrow as a result of pedaling at a certain frequency with the simulation of rotating the mouse wheel, etc. This will greatly facilitate, for example, alternating the use of the exercise machine with different computing devices 13, e.g., when the user trains sometimes with a VR set connected and other times with a computer.

As an example, the use of this step during the use of the exercise machine or method of the invention occurs as follows:
If the character representing the player in the computer game moves on foot, its forward movement is triggered in the computer game by the "w" key. However, if the character representing the player is to move by car or other means of transport, the forward movement is triggered by the "r" key.

The user defines both options of activity conversion (e.g. conversion 1: a pedaling frequency greater than 30 revolutions per minute corresponds to pressing the "w" key; conversion 2: a pedaling frequency greater than 30 revolutions per minute corresponds to pressing the "r" key) and only switches between these two options of transformation during the game, depending on whether their character in the computer game is to move on foot or by vehicle. The signal generated by the sensor 7 of activity on the flywheel 5 is converted into the keyboard signal "w" or "r" according to the current selection made by the user. The user may make this selection, for example, on the electronic control unit 8, by pressing a key combination on the computer keyboard, or by entering a voice command to the electronic control unit 8 or the computing device 13.

Fig. 21 shows a flow chart describing a first exemplary embodiment of the method of the invention. In this embodiment, the control unit 8, distinct from the computing device 13, receives a signal, or data, from the sensor 7 of activity of the exercise element and also an input signal generated by the input peripheral device 9. Thus, at a particular moment, the control unit 8 may receive a signal from the sensor 7 of activity of the components of the exercise element, from the input peripheral device 9, from both, or it may not receive any signal at all, depending on whether, by exercising on the exercise element 19, the user is currently influencing the movement of its components such as the flywheel 5 and/or is using the given input peripheral device 9. The data from the sensor 7 of activity of the components of the exercise element 19, if being received, are converted into a digital control signal functionally identical to a signal from the input peripheral device 9 and are sent to the computing device 13. The converted signal is functionally identical to the signal from the input peripheral device 9 if it elicits the same response in the computing device 13 as would be elicited by one of the signals generatable by the input peripheral device 9. The signal from the input peripheral device 9, both the signal with which the digital control signal based on the activity of the components of the exercise element is equated and other signals, for example carrying information about the pressing of other keys, is forwarded to the computing device 13, similarly as if the input peripheral device 9 were directly data-connected to the computing device 13. Thus, the same communication channel, e.g., the same USB port, is used to transmit the converted signal and the signal from the input peripheral device 9. In principle, the converted signal can be then added to the signal from the input peripheral device 9, which is only forwarded by the control unit 8, and the resulting signal is sent to the computing device 13.

Thus, the computing device 13 then receives both said converted control signal and the forwarded signal originating from one or more input peripheral devices 9. All these signals are processed by the computing device 13 in the same way as if they had originated directly from the input peripheral device 9, and the application running on the computing device 13 is controlled with respect to these signals. During this method, the resistance of the flywheel 5 can be adjusted, for example by means of the control unit 8 as indicated in the drawing, but alternatively also by other control elements, for example provided on the exercise machine exclusively for this purpose. The mechanism for configuring the resistance of the flywheel 5, for example a magnetic one, is then preferably data-connected to the control unit 8 for configuring the resistance and/or measuring the configured resistance as a part of the measured activity.

This embodiment is particularly preferred, for example, for use with computing devices 13 that cannot receive signal from multiple input peripheral devices simultaneously. As an example, the recording and conversion of the signal can be implemented as follows:
If the signal from the sensor 7 of activity of the components of the exercise element generated by pedaling at a pedaling frequency exceeding 10 revolutions per minute is to be converted into a control signal functionally identical to the signal generated by the computer keyboard when the "w" key is pressed, then the user may perform assignment of the corresponding signal in the following way: they enter a command in the control unit 8 to copy the signal of the computer keyboard connected to the control unit 8 and press the "w" key on the computer keyboard. The signal copied in this way will be stored in the control unit 8 and named, for example, "Signal S1". Subsequently, the user enters in the control unit 8 the command "if the pedaling frequency is higher than 10 revolutions per minute, then let the control unit 8 add the Signal S1 to the keyboard signal passing through it towards the computing device 13".

Alternatively, the signal from the computer keyboard (or other input peripheral device 9) does not have to be copied in the control unit 8, but the control unit 8 may include a set of instructions corresponding to the standard computer keyboard (or other input peripheral device 9) from the factory. The user then simply enters in the control unit 8 the command "if the pedaling frequency is higher than 10 revolutions per minute, then let the control unit 8 add a signal corresponding to pressing the "w" key to the keyboard signal passing through it towards the computing device 13".

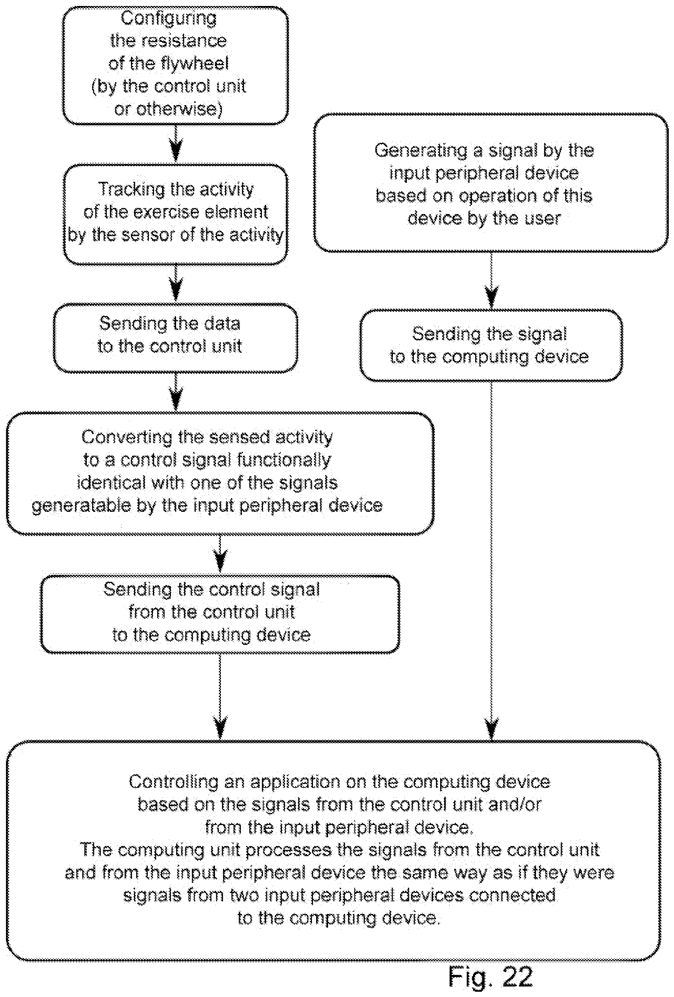

Fig. 22 shows a flow chart describing a second exemplary embodiment of the method of the invention. The processing of the data from the sensor 7 of activity of the components of the exercise element is performed here in the same way as in the first embodiment above, i.e., the signal is converted in the control unit 8 into a control signal functionally identical to the signal generatable by the input peripheral device and the resulting control signal is sent to the computing device 13. Simultaneously, the resistance of the flywheel 5 can be configured similarly as above, and this resistance can then be reflected in the measured activity. Thus, the signal generated by the control unit 8 is again processed by the computing device 13 in the same way the input signal generated by the input peripheral device 9 would be processed. In this embodiment, the signal generated by the input peripheral device 9 is sent directly to the computing device 13, which again processes the converted signal from the control unit 8. Thus, the computing device 13 processes the input signals in the same way it would process signals from two input peripheral devices simultaneously connected to the computing device 13.

The assignment of the desired input signal of the input peripheral device 9, i.e., for example, the assignment of a specific key, to the converted control signal can then be done separately, before starting to use the exercise machine, for example, by plugging the input peripheral device 9 into the control unit 8 such that the control unit 8 can receive the signal it is to subsequently mimic, or by copying the standard form of the signal for the most common input peripheral device 9, i.e. for example, by storing the signal corresponding to all keyboard keys, mouse buttons, etc. in the memory of the control unit 8 during the programming of the control unit 8 at the time of manufacture. Furthermore, the control unit 8 and the input peripheral device 9 may be connected to the computing device 13 via another device combining their outputs, for example via a USB hub.

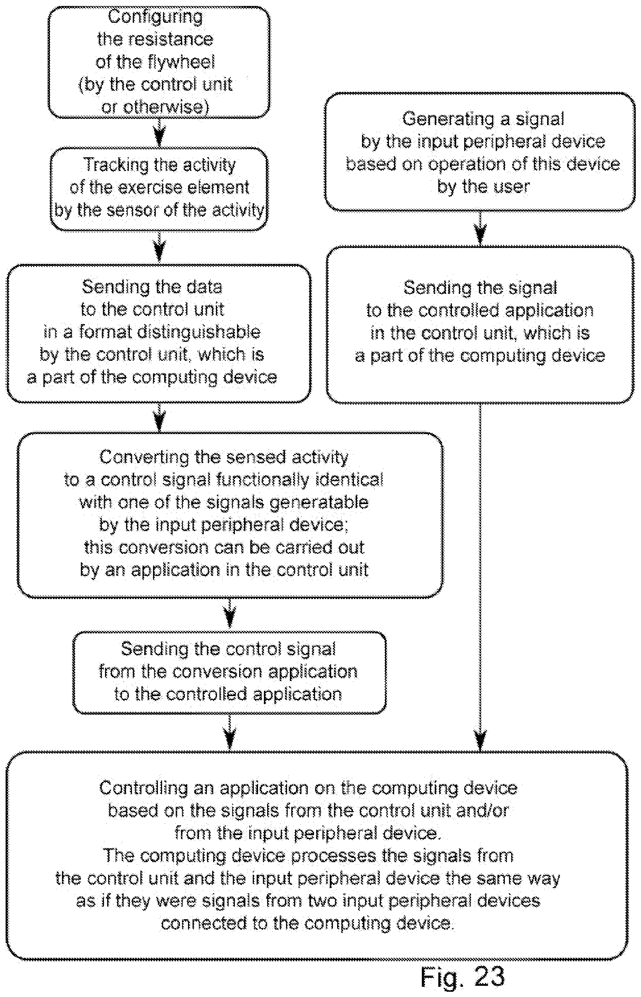

Fig. 23 shows a flow chart describing a third exemplary embodiment of the method of the invention. In this embodiment, the signal from the sensor 7 of activity of the components of the exercise element 19 as well as from the input peripheral device 9 is sent to the control unit 8, similarly to the first exemplary embodiment, but this control unit 8 is part of the computing device 13, i.e. it also serves as the computing device 13 / processor of the computing device 13 on which programs, e.g. a computer game, run. The control unit 8 thus provides for the running of a conversion program that converts data from the sensor 7 of activity of the components of the exercise element into a control signal functionally equated with a signal from the input peripheral device 9. The control signal is then sent from the conversion program to the controlled program. The signal from the input peripheral device 9 can be sent directly to the controlled program, which again does not distinguish between signal sources - the signal from the sensor 7 of activity of the components of the exercise element converted into a control signal corresponding to a certain input signal (pressing a specific key) of the input peripheral device 9 elicits the same response as the signal from the input peripheral device 9 generated by pressing the corresponding key.

Furthermore, in all these embodiments of the method of the invention, preferably a selectively initiated step is provided by which the delivery of the converted control signal from the control unit 8 to the computing device 13, or from the conversion application to the controlled application, etc., is stopped and subsequently optionally started again, or the actual conversion or reception of data from the sensor 7 of activity of the components of the exercise element 19 is stopped. In particular, in the embodiments above, the input signal of the input peripheral device 9 is considered to be a signal generated by the input peripheral device 9 in reaction to pressing a key. Analogously, however, any device capable of delivering instructions or information to another electronic device, in particular the computing device 13, can be used as the input peripheral device 9, and the given input signal then corresponds to a certain control element on that other device, for example, pressing a certain icon on a touchscreen, rotating a mouse wheel, a certain instruction to a voice assistant, a certain gesture made on a camera and recognized by a computer vision algorithm, pressing a button on a game console controller, rotating a game steering wheel, pedaling game pedals, etc.

The control unit 8 of the exercise machine of any of the embodiments, in particular of the embodiment of the first example of fig. 1, the second example of fig. 2, or the third example of fig. 6, can be specifically adapted to implement the method of any of said three main embodiments of figs. 21 to 23. Thus, e.g., the embodiment of fig. 1 may have a control unit 8 with program instructions for implementing the method of fig. 21; the embodiment of fig. 2 may have a control unit 8 with program instructions for implementing the method of fig. 22; and the embodiment of fig. 6 may have a control unit 8 with program instructions for implementing the method of fig. 23.

The exercise machine of the invention, in particular the control unit 8 thereof, may in some embodiments be adapted to perform some or all of the steps of the method of the invention, in particular as described above, for example with respect to the flow charts provided. The method of the invention may be analogously adjusted with respect to the function of a certain embodiment of the exercise machine of the invention. As an example, the exercise machine of the invention or the method of the invention may be used, for example, as follows:
During the exercise, the user plays a computer game in which a character representing the player moves through a three-dimensional virtual environment using these common inputs:
- the character's forward movement is generated by pressing the "w" key on the computer keyboard,
- the character's backward movement is generated by pressing the "s" key,
- the character's sidesteps to the left using the "a" key,
- the character's sidesteps to the right using the "d" key,
- the direction of the character's movement is determined using the computer mouse.

The signal generated by the sensor 7 of activity of the components of the exercise element 19, which measures the pedaling frequency, is transformed into (converted to) a signal identical to the signal generated by the keyboard when the "w" key is pressed, but only when a minimum value of the exercise-elicited signal from the sensor 7 of activity of the components of the exercise element 19 pre-configured by the user is reached (for example, a pedaling frequency of 50 revolutions per minute). Thus, when such a minimum value of the signal from the activity is reached, the computer game receives a signal identical to the signal which would be generated by the computer keyboard if the "w" key were pressed, and the character in the computer game moves forward as if the user was pressing down the "w" key. When the pedaling frequency drops below the pre-configured value, the signal transformation stops and the forward movement of the player's character in the computer game is interrupted, just as if the player stopped pressing the "w" key.

Furthermore, the object of the invention is a system that comprises an exercise machine of the invention and further comprises a display unit 12 and a computing device 13, which are communicatively connected to each other and/or to the control unit 8. The computing device 13 is, e.g., a computer, game console, smartphone, tablet, or headset for virtual or augmented reality. The display unit 12 is, for example, a headset for virtual or augmented reality, projector, or screen. Further features of the system may then be implemented as described above for the exercise machine of the invention, and/or to correspond to the features of the method of the invention as described above in any of the embodiments.

### Industrial Applicability

The invention is a device that is well applicable in homes, offices, and fitness centers. A large part of the world's population spends a significant part of their time working or playing using computing technology, whether it is personal computers, game consoles, tablets, or phones. Many people also work from home, especially after the COVID19 pandemic. Simultaneously, many people find it difficult to get motivated and maintain the motivation to engage in regular physical activity, which leads to an absence thereof and contributes to the development of some civilization diseases.

Exercising on cycle machines is beneficial for circulatory system and the muscles and joints of the lower limbs but is relatively monotonous. The invention allows such exercise to be combined with the fun of playing computer games or other activities in a virtual environment, which increases the fun of the exercise and the user's motivation to exercise. Furthermore, the invention allows users to perform such a relatively monotonous exercise simultaneously with work or entertainment on a computer (reading articles on the Internet, browsing social media posts, watching videos), thus making it more enjoyable for the user. Furthermore, when exercising during work, the invention saves the user time that the user would otherwise spend on a separate physical exercise outside of working hours.

### List of Reference Signs

| | | | |
|---|---|---|---|
| 1 - | Support structure | 13 - | Computing device |
| 2 - | Seat | 14 - | Headrest |
| 3 - | Armrest | 15 - | Support element of the headrest |
| 4 - | Support platform | 16 - | Pillar |
| 5 - | Flywheel | 17 - | Guide element of the headrest |
| 6 - | Pedal | 18 - | Stand of the exercise element |
| 7 - | Sensor of activity | 19 - | Exercise element |
| 8 - | Control unit | 20 - | Anchor ring |
| 9 - | Input peripheral device | 21 - | Quick-release clamp |
| 10 - | Backrest | 22 - | Belt |
| 11 - | Attachment element | 23 - | Base of the seat and backrest |
| 12 - | Display unit | | |

## Claims

1. An exercise machine comprising a support structure (1), a seat (2), a backrest (10), at least one armrest (3) with a support platform (4), and an exercise element (19), wherein the exercise element (19) comprises pedals (6) and a flywheel (5) connected to the pedals (6) and attached to the support structure (1), wherein the exercise machine further comprises a sensor (7) of activity of the exercise element (19) and a control unit (8) communicatively connected to the sensor (7) of activity,
wherein it further comprises at least one input peripheral device (9) for generating a signal for controlling a computing device (13) selected from a set comprising computers, game consoles, smartphones, tablets, and headsets for virtual reality or augmented reality, wherein the control unit (8) is adapted to
• receive information about activity of the exercise element (19),
• convert the information about the activity of the exercise element (19) to at least one digital control signal for controlling said computing device (13) with a response identical to the response of said computing device (13) in reaction to at least one signal generatable by said input peripheral device (9), and
• provide this control signal, wherein the provided control signal is influenced by what device the input peripheral device (9) is.

2. The exercise machine according to claim 1, wherein the control unit (8) is adapted to convert the information about the activity of the exercise element into at least one digital control signal equated with at least one digital signal generatable by the input peripheral device (9).

3. The exercise machine according to any one of the preceding claims, wherein the support platform (4) defines a location for placement and operation of at least one input peripheral device (9).

4. The exercise machine according to any one of the preceding claims, wherein the control unit (8) is adapted to receive at least one signal generated by the input peripheral device (9) and to provide said digital control signal equated with said received signal.

5. The exercise machine according to any one of the preceding claims, wherein the control unit (8) is adapted to selectively interrupt the provision of the digital control signal.

6. The exercise machine according to any one of the preceding claims, wherein it further comprises an attachment element (11) for attaching a display unit (12).

7. The exercise machine according to any one of the preceding claims, wherein at least a part of the exercise element (19) is rotational relative to the support structure (1) around an axis different from an axis of rotation of the pedals (6) for configuring distance of the axis of rotation of the pedals (6) from the ground.

8. A method for providing a control signal for a computing device carried out by the exercise machine implemented according to any one of the preceding claims, comprising the steps of:
- measuring activity of the exercise element (19) by the sensor (7) of activity of the exercise element (19)
- sending values measured by the sensor (7) of activity to the control unit (8)
- converting the value of the measured activity to at least one digital control signal by the control unit (8)
wherein the digital control signal is a signal for controlling the computing device (13) with a response identical to the response of that computing device (13) in reaction to at least one signal generatable by the input peripheral device (9) that is a part of the exercise machine, wherein the provided control signal is influenced by what device the input peripheral device (9) is.

9. The method according to claim 8, wherein the digital control signal is equated during the conversion with at least one signal from the input peripheral device (9).

10. The method according to any one of claims 8 or 9, wherein the activity of the exercise element (19) is at least one of the following quantities: angular speed of the flywheel (5), cadence of pressing of the pedals (6), direction of rotation of the flywheel (5), direction of pressing of the pedals (6), direction of movement of the element connecting the flywheel (5) to the pedals (6), speed of movement of the element connecting the flywheel (5) to the pedals (6), or power generated by the rotation of the flywheel (5).

11. The method according to any one of claims 8 to 10, wherein the control signal has at least two values and the activity of the exercise element (19) is divided into at least two intervals of values divided by a threshold value, wherein the control signal has a first value when the activity of the exercise element (19) lies in the first interval and a second value when the activity of the exercise element (19) lies in the second interval.

12. The method according to any one of claims 8 to 11, wherein the control signal changes continuously with a change in activity of the exercise element (19).

13. The method according to any one of claims 8 to 12, wherein it comprises a step of sending the control signal from the control unit (8) and a step of selectively pausing the sending of the control signal.

14. The method according to any one of claims 8 to 13, wherein the input peripheral device (9) is a device for selectively generating a plurality of different signals of the input peripheral device (9), wherein the method further comprises a step of assigning the control signal to a particular one of said signals of the input peripheral device (9).

15. A system comprising at least one display unit (12) and computing device (13) communicatively connected to the display unit (12), wherein it comprises the exercise machine according to any one of claims 1 to 7, wherein the computing device (13) is communicatively connected to the control unit (8).

## Patentansprüche

1. Ein Übungsgerät, umfassend eine Tragkonstruktion (1), einen Sitz (2), eine Rückenlehne (10), mindestens eine Armlehne (3) mit einer Stützplattform (4) und ein Übungselement (19), wobei das Übungselement (19) Pedale (6) und ein Schwungrad (5) umfasst, das mit den Pedalen (6) verbunden und an der Tragkonstruktion (1) befestigt ist, wobei das Übungsgerät ferner einen Aktivitätssensor (7) des Übungselements (19) und eine Steuereinheit (8) umfasst, die kommunikativ mit dem Aktivitätssensor (7) verbunden ist,
wobei es ferner mindestens eine Eingabeperipherievorrichtung (9) zum Erzeugen eines Signals zur Steuerung eines Rechengeräts (13) umfasst, das aus einer Gruppe ausgewählt ist, die Computer, Spielkonsolen, Smartphones, Tablets und Headsets für virtuelle Realität oder erweiterte Realität umfasst, wobei die Steuereinheit (8) dazu ausgelegt ist,
- Informationen über die Aktivität des Übungselements (19) zu empfangen,
- die Informationen über die Aktivität des Übungselements (19) in mindestens ein digitales Steuersignal umzuwandeln, um das genannte Rechengerät (13) mit einer Reaktion zu steuern, die mit der Reaktion des genannten Rechengeräts (13) als Reaktion auf mindestens ein von der genannten Eingabeperipherievorrichtung (9) erzeugbares Signal identisch ist, und
- dieses Steuersignal bereitzustellen, wobei das bereitgestellte Steuersignal davon beeinflusst wird, um welche Vorrichtung es sich bei der Eingabeperipherievorrichtung (9) handelt.

2. Das Übungsgerät nach Anspruch 1, wobei die Steuereinheit (8) dazu ausgelegt ist, die Informationen über die Aktivität des Übungselements in mindestens ein digitales Steuersignal umzuwandeln, das mit mindestens einem von der Eingabeperipherievorrichtung (9) erzeugbaren digitalen Signal gleichgesetzt ist.

3. Das Übungsgerät nach einem der vorstehenden Ansprüche, wobei die Stützplattform (4) einen Ort zum Aufstellen und Betreiben mindestens einer Eingabeperipherievorrichtung (9) definiert.

4. Das Übungsgerät nach einem der vorstehenden Ansprüche, wobei die Steuereinheit (8) dazu ausgelegt ist, mindestens ein von der Eingabeperipherievorrichtung (9) erzeugtes Signal zu empfangen und das mit dem empfangenen Signal gleichgesetzte digitale Steuersignal bereitzustellen.

5. Das Übungsgerät nach einem der vorstehenden Ansprüche, wobei die Steuereinheit (8) dazu ausgelegt ist, die Bereitstellung des digitalen Steuersignals selektiv zu unterbrechen.

6. Das Übungsgerät nach einem der vorstehenden Ansprüche, wobei es ferner ein Befestigungselement (11) zum Befestigen einer Anzeigeeinheit (12) umfasst.

7. Das Übungsgerät nach einem der vorstehenden Ansprüche, wobei zumindest ein Teil des Übungselements (19) relativ zur Tragkonstruktion (1) um eine Achse drehbar ist, die sich von der Drehachse der Pedale (6) unterscheidet, um den Abstand der Drehachse der Pedale (6) vom Boden zu bestimmen.

8. Ein Verfahren zur Bereitstellung eines Steuersignals für ein Rechengerät, das vom nach einem der vorstehenden Ansprüche implementierten Übungsgerät ausgeführt wird, umfassend die folgenden Schritte:
- Messen der Aktivität des Übungselements (19) durch den Aktivitätssensor (7) des Übungselements (19),
- Senden der vom Aktivitätssensor (7) gemessenen Werte an die Steuereinheit (8),
- Umwandeln des Wertes der gemessenen Aktivität in mindestens ein digitales Steuersignal durch die Steuereinheit (8),
wobei das digitale Steuersignal ein Signal zur Steuerung des Rechengeräts (13) ist, dessen Reaktion mit der Reaktion dieses Rechengeräts (13) auf mindestens ein von der Eingabeperipherievorrichtung (9), die Teil des Übungsgeräts ist, erzeugbares Signal identisch ist, wobei das bereitgestellte Steuersignal davon beeinflusst wird, um welche Art von Vorrichtung es sich bei der Eingabeperipherievorrichtung (9) handelt.

9. Das Verfahren nach Anspruch 8, wobei das digitale Steuersignal während der Umwandlung mit mindestens einem Signal von der Eingabeperipherievorrichtung (9) gleichgesetzt wird.

10. Das Verfahren nach einem der Ansprüche 8 oder 9, wobei die Aktivität des Übungselements (19) mindestens eine der folgenden Größen ist: Winkelgeschwindigkeit des Schwungrades (5), Trittfrequenz der Pedale (6), Drehrichtung des Schwungrades (5), Tretrichtung der Pedale (6), Bewegungsrichtung des Elements, das das Schwungrad (5) mit den Pedalen (6) verbindet, Bewegungsgeschwindigkeit des Elements, das das Schwungrad (5) mit den Pedalen (6) verbindet, oder durch die Drehung des Schwungrades (5) erzeugte Leistung.

11. Das Verfahren nach einem der Ansprüche 8 bis 10, wobei das Steuersignal mindestens zwei Werte aufweist und die Aktivität des Übungselements (19) in mindestens zwei durch einen Schwellenwert getrennte Werteintervalle unterteilt ist, wobei das Steuersignal einen ersten Wert aufweist, wenn die Aktivität des Übungselements (19) im ersten Intervall liegt, und einen zweiten Wert, wenn die Aktivität des Übungselements (19) im zweiten Intervall liegt.

12. Das Verfahren nach einem der Ansprüche 8 bis 11, wobei sich das Steuersignal bei einer Änderung der Aktivität des Übungselements (19) kontinuierlich ändert.

13. Das Verfahren nach einem der Ansprüche 8 bis 12, wobei es einen Schritt des Sendens des Steuersignals aus der Steuereinheit (8), und einen Schritt des selektiven Unterbrechens des Sendens des Steuersignals umfasst.

14. Das Verfahren nach einem der Ansprüche 8 bis 13, wobei die Eingabeperipherievorrichtung (9) eine Vorrichtung zur selektiven Erzeugung einer Vielzahl verschiedener Signale der Eingabeperipherievorrichtung (9) ist, wobei das Verfahren ferner einen Schritt des Zuordnens des Steuersignals zu einem bestimmten der genannten Signale der Eingabeperipherievorrichtung (9) umfasst.

15. Ein System, das mindestens eine Anzeigeeinheit (12) und ein Rechengerät (13) umfasst, das kommunikativ mit der Anzeigeeinheit (12) verbunden ist, wobei es das Übungsgerät nach einem der Ansprüche 1 bis 7 umfasst, wobei das Rechengerät (13) kommunikativ mit der Steuereinheit (8) verbunden ist.

## Revendications

1. Une machine d'exercice, comprenant une structure de support (1), un siège (2), un dossier (10), au moins un accoudoir (3) avec une plate-forme de support (4), et un élément d'exercice (19), où l'élément d'exercice (19) comprend des pédales (6) et un volant d'inertie (5) relié aux pédales (6) et fixé à la structure de support (1), où la machine d'exercice comprend en outre un capteur d'activité (7) de l'élément d'exercice (19) et une unité de commande (8) reliée de manière communicative au capteur d'activité (7),
où il comprend en outre au moins un dispositif périphérique d'entrée (9) destiné à générer un signal pour commander un dispositif informatique (13) choisi parmi un ensemble comprenant des ordinateurs, des consoles de jeux, des smartphones, des tablettes et des casques de réalité virtuelle ou de réalité augmentée, où l'unité de commande (8) est adaptée pour
- recevoir des informations concernant l'activité de l'élément d'exercice (19),
- convertir les informations relatives à l'activité de l'élément d'exercice (19) en au moins un signal de commande numérique destiné à commander ledit dispositif informatique (13) avec une réponse identique à celle dudit dispositif informatique (13) en réaction à au moins un signal pouvant être généré par ledit dispositif périphérique d'entrée (9), et
- fournir ce signal de commande, où le signal de commande fourni est influencé par le type de dispositif que constitue le dispositif périphérique d'entrée (9).

2. La machine d'exercice selon la revendication 1, où l'unité de commande (8) est adaptée pour convertir les informations relatives à l'activité de l'élément d'exercice en au moins un signal de commande numérique équivalent à au moins un signal numérique pouvant être généré par le dispositif périphérique d'entrée (9).

3. La machine d'exercice selon l'une quelconque des revendications précédentes, où la plate-forme de support (4) définit un emplacement pour le placement et le fonctionnement d'au moins un dispositif périphérique d'entrée (9).

4. La machine d'exercice selon l'une quelconque des revendications précédentes, où l'unité de commande (8) est adaptée pour recevoir au moins un signal généré par le dispositif périphérique d'entrée (9) et pour fournir ledit signal de commande numérique équivalent audit signal reçu.

5. La machine d'exercice selon l'une quelconque des revendications précédentes, où l'unité de commande (8) est adaptée pour interrompre de manière sélective la fourniture du signal de commande numérique.

6. La machine d'exercice selon l'une quelconque des revendications précédentes, où il comprend en outre un élément de fixation (11) destiné à fixer une unité d'affichage (12).

7. La machine d'exercice selon l'une quelconque des revendications précédentes, où au moins une partie de l'élément d'exercice (19) peut tourner par rapport à la structure de support (1) autour d'un axe différent de l'axe de rotation des pédales (6) afin de configurer la distance entre l'axe de rotation des pédales (6) et le sol.

8. Un procédé pour fournir un signal de commande à un dispositif informatique, effectué par la machine d'exercice réalisé selon l'une quelconque des revendications précédentes, comprenant les étapes consistant à :
- mesurer l'activité de l'élément d'exercice (19) à l'aide du capteur d'activité (7) de l'élément d'exercice (19),
- envoyer les valeurs mesurées par le capteur d'activité (7) à l'unité de commande (8)
- convertir la valeur de l'activité mesurée en au moins un signal de commande numérique par l'unité de commande (8),
où le signal de commande numérique est un signal destiné à commander le dispositif informatique (13) avec une réponse identique à la réponse de ce dispositif informatique (13) en réaction à au moins un signal pouvant être généré par le dispositif périphérique d'entrée (9) qui fait partie de la machine d'exercice,
où le signal de commande fourni est influencé par le type de dispositif que constitue le dispositif périphérique d'entrée (9).

9. Le procédé selon la revendication 8, où le signal de commande numérique est mis en correspondance, lors de la conversion, avec au moins un signal provenant du dispositif périphérique d'entrée (9).

10. Le procédé selon l'une quelconque des revendications 8 ou 9, où l'activité de l'élément d'exercice (19) correspond à au moins l'une des grandeurs suivantes : vitesse angulaire du volant d'inertie (5), la cadence d'actionnement des pédales (6), le sens de rotation du volant d'inertie (5), le sens d'actionnement des pédales (6), le sens de déplacement de l'élément reliant le volant d'inertie (5) aux pédales (6), la vitesse de déplacement de l'élément reliant le volant d'inertie (5) aux pédales (6), ou la puissance générée par la rotation du volant d'inertie (5).

11. Le procédé selon l'une quelconque des revendications 8 à 10, où le signal de commande présente au moins deux valeurs et l'activité de l'élément d'exercice (19) est divisée en au moins deux intervalles de valeurs séparés par une valeur seuil, où le signal de commande présente une première valeur lorsque l'activité de l'élément d'exercice (19) se situe dans le premier intervalle et une deuxième valeur lorsque l'activité de l'élément d'exercice (19) se situe dans le deuxième intervalle.

12. Le procédé selon l'une quelconque des revendications 8 à 11, où le signal de commande varie de manière continue en fonction d'une variation de l'activité de l'élément d'exercice (19).

13. Le procédé selon l'une quelconque des revendications 8 à 12, où il comprend une étape consistant à envoyer le signal de commande depuis l'unité de commande (8) et une étape consistant à interrompre de manière sélective l'envoi du signal de commande.

14. Le procédé selon l'une quelconque des revendications 8 à 13, où le dispositif périphérique d'entrée (9) est un dispositif destiné à générer de manière sélective une pluralité de signaux différents du dispositif périphérique d'entrée (9), où le procédé comprend en outre une étape consistant à attribuer le signal de commande à l'un particulier desdits signaux du dispositif périphérique d'entrée (9).

15. Un système comprenant au moins une unité d'affichage (12) et un dispositif informatique (13) connecté de manière communicative à l'unité d'affichage (12), où il comprend la machine d'exercice selon l'une quelconque des revendications 1 à 7, où le dispositif informatique (13) est connecté de manière communicative à l'unité de commande (8).
